# EUROPEAN PATENT APPLICATION

(11) **EP 2 182 425 A1**
(43) Date of publication of application: **05.05.2010**
(21) Application number: 08778110.0
(22) Date of filing: 11.07.2008
(51) Int. Cl.: G06F 3/041, H01R 12/04

(54) **PROTECTION PANEL WITH TOUCH INPUT FUNCTION AND METHOD FOR PRODUCING THE PROTECTION PANEL**

(30) Priority: 24.07.2007 JP 2007192323
(71) Applicant: NISSHA PRINTING CO., LTD., Nakagyo-ku Kyoto-shi Kyoto 604-8551 (JP)
(72) Inventor: KAI, Yoshihiro, Kyoto-shi Kyoto 604-8551 (JP); NISHIMURA, Takeshi, Kyoto-shi Kyoto 604-8551 (JP)
(74) Representative: Lemcke, Brommer & Partner
(86) International application number: PCT/JP2008/062595
(87) International publication number: WO 2009/014020

(57) **Abstract**

A protection panel with a touch input function and a method for manufacturing the same are disclosed in which a thickness of a protection panel is reduced by using a glass plate as a rear substrate, and at the same time, a risk of generating crack or fracture in the rear substrate is suppressed, when a conductive pin is press-fitted into a through hole of the rear substrate. The protection panel with a touch input function includes: a front substrate (6) which has a resistive film (6A) formed on a rear face of the front substrate and whose rim portion (6E) is decorated; and a rear substrate (5) including at least a glass plate which has a resistive film (5A) on a front face of the rear substrate and whose rim portion has through holes (5a,5b) for electric conduction, which are connected so that the resistive films (5A,6A) are opposingly arranged with a predetermined gap, and electrodes (5D,6D) of the resistive films (5A,5B) are conductively connected to external terminals C through the through holes (5a,5b). In this protection panel, a conductive adhesive (10) is injected into the through hole (5a,5b), and a protection member (12) is provided between a conductive pin (11) inserted into the through hole (5a,5b) with the conductive adhesive (10) injected thereinto and an inner wall of the through hole (5a,5b).

## Description

### Technical field

The present invention relates to a protection panel with a touch input function including: a front substrate which has a resistive film formed on a rear face of the front substrate and whose rim portion is decorated; and a rear substrate including at least a glass plate which has a resistive film formed on a front face of the rear substrate and whose rim portion has through holes for electric conduction formed therein, the front and rear substrates being connected so that the resistive films are opposingly arranged with a predetermined gap, and electrodes of the respective resistive films being conductively connected to corresponding external terminals utilizing the respective through holes, and to a method for manufacturing the same.

### Background art

With respect to the protection panel with a touch input function as described above, there can be mentioned one in which, into a through hole of a rear substrate (substrate on an untouchable side) made of a resin plate or a glass plate, a conductive paste as an adhesive is injected and a conductive pin (rivet) is inserted, to thereby form an conductive portion that allows a conductive connection between external terminals and respective electrodes of resistive films formed in both a front substrate (substrate on a touchable side) and the rear substrate (see, for example, Patent Document 1).
[Patent Document 1] WO2005/114367

### Disclosure of the invention

### Problem to be solved by the invention

In the configuration above, a conductive connection state with the electrode of the resistive film is retained by preventing the coming-off of the conductive pin utilizing an adhesion force of an adhesive, but the adhesion force of the adhesive alone is not sufficient to retain the pin. Therefore, it is difficult to retain a state in which the conductive pin forms a connection with the electrode of the resistive film for a long period of time, and thus there is a room for improving durability. Accordingly, it has been proposed that a resin plate is used for the rear substrate and the conductive pin is press-fitted into a through hole of the rear substrate, to thereby utilize a pressure generated between an inner wall of the through hole and the conductive pin as well as the adhesion force of the adhesive, in order to retain a state in which the conductive pin forms a connection with the electrode of the resistive film for a long period of time, and thus to improve durability.
It has been also proposed that, by using a resin plate made of a thermoplastic resin as the rear substrate, and performing press-fitting of the conductive pin into the through hole of the rear substrate by ultrasonic melting, a risk of generating crack or fracture in the rear substrate can be effectively suppressed when the conductive pin is press-fitted into the through hole of the rear substrate.

On the other hand, it has been known that when a glass plate such as soda glass, borosilicate glass and toughened glass, which is excellent in a strength and transmissivity (transmissivity of light; the same applies below) as compared with a resin plate, is used for the rear substrate, a high strength and high visibility can be obtained as a protection panel. In addition, due to the high strength, it becomes possible to reduce a thickness of the protection panel by reducing a thickness of the rear substrate.
However, since the rear substrate is as thin as approximately 0.2 to 3.0 mm, when a glass plate is used for the rear substrate and a conductive pin is press-fitted into a through hole of the rear substrate, the rear substrate may have a higher risk of crack or fracture due to the press-fitting. In addition, when a glass plate is used for the rear substrate, press-fitting of the conductive pin into the through hole of the rear substrate cannot be preformed using ultrasonic melting, and it becomes impossible to reduce the risk of crack or fracture in the rear substrate caused by the press-fitting.

The object of the present invention is to effectively suppress a risk of generating crack or fracture in the rear substrate when a conductive pin is press-fitted into the through hole of the rear substrate, while reducing the thickness of the protection panel by using a glass plate for a rear substrate.

### Means to solve the problem

In order to attain the above-mentioned object, in a first feature of a protection panel with a touch input function according to the present invention, there is provided a protection panel including: a front substrate which has a resistive film formed on a rear face of the front substrate and whose rim portion is decorated; and a rear substrate including at least a glass plate which has a resistive film formed on a front face of the rear substrate and whose rim portion has through holes for electric conduction formed therein, the front and rear substrates being connected so that the resistive films are opposingly arranged with a predetermined gap, and electrodes of the respective resistive films being conductively connected to corresponding external terminals utilizing the respective through holes, wherein a conductive adhesive is injected into the through hole, and a protection member is provided between a conductive pin inserted into the through hole and an inner wall of the through hole, the conductive pin being inserted into the through hole so that one end portion of the conductive pin is brought into contact with the injected conductive adhesive.

According to this feature, the conductive pin is inserted into the through hole of the rear substrate made of a glass plate, through the protection member. Accordingly, even when the insertion of the conductive pin is performed by press-fitting in order to surely prevent the conductive pin from coming off from the through hole, the inner wall of the through hole can be protected by the protection member. As a result, while a glass plate is used for the rear substrate, a risk of generating crack or fracture in the rear substrate that would otherwise be caused by the press-fitting of the conductive pin into the through hole of the rear substrate can be effectively suppressed.
In addition, if a thermoplastic resin is used for the protection member, even though a glass plate is used for the rear substrate, a conductive pin can be press-fitted into the through hole of the rear substrate through the protection member by ultrasonic welding. With this configuration, a risk of generating crack or fracture in the rear substrate that would otherwise be caused by the press-fitting can be further suppressed.
Therefore, by using a glass plate having a higher strength and transmissivity than that of the resin plate as a rear substrate, while providing a thinner protection panel with higher visibility, a risk of generating crack or fracture in the rear substrate can be effectively suppressed when the conductive pin is press-fitted into the through hole of the rear substrate, and as a result, the protection panel with a touch input function in which thickness reduction and visibility are intended to be enhanced can be also enhanced in its productivity.

In a second feature of the protection panel with a touch input function according to the present invention, a conductive portion that allows a conductive connection between an electrode of the resistive film and an external terminal may be formed of the conductive adhesive and the conductive pin inserted into the through hole.

According to this feature, a touch input signal from the resistive film can be taken out from a rear face side of the rear substrate through the conductive adhesive and the conductive pin. With this configuration, it is not necessary to provide, as a conductive portion, a flexible print circuit (FPC) or the like extending from the electrode of the resistive film to a lateral side of the front substrate or the rear substrate, which is otherwise required in a case where a touch input signal from the resistive film is taken out from a lateral side of the front substrate or the rear substrate. As a result, enlargement in size of the protection panel can be suppressed, while the protection panel is still provided with a touch input function.
In addition, as described above, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
Therefore, with respect to the protection panel with a touch input function in which a glass plate is used for the rear substrate for enhancing thickness reduction and visibility, while suppressing enlargement in size thereof, it is also possible to enhance durability and reliability.

In a third feature of the protection panel with a touch input function according to the present invention, the protection member may be made of an insulating resin.

According to this feature, on a rear face side of the rear substrate where a touch input signal from the resistive film is taken out, even when electrically conductive foreign matters, such as metal powder, are attached to the protection member, electrical leakage or the like that would otherwise be caused by the attached matters can be prevented.
Therefore, it is possible to enhance reliability of the protection panel with a touch input function.

In a fourth feature of the protection panel with a touch input function according to the present invention, the protection member may be made of the conductive adhesive.

According to this feature, as compared with a case where a protection member is provided as a separate component or formed by a specific working process, a number of parts can be reduced and a production process can be simplified.
Therefore, it is possible to further enhance productivity of the protection panel with a touch input function.

In a fifth feature of the protection panel with a touch input function according to the present invention, the front substrate and the rear substrate may be provided in a display window formed in a housing of an electronic device through a mounting platform, and the protection member may be integrally formed with the mounting platform.

According to this feature, as compared with a case where a protection member is provided as a separate component or formed by a specific working process, a number of parts can be reduced and a production process can be simplified.
Therefore, it is possible to further enhance productivity of the protection panel with a touch input function.

In a sixth feature of the protection panel with a touch input function according to the present invention, the front substrate and the rear substrate may be provided in a display window formed in a housing of an electronic device, and the protection member may be integrally formed with the housing.

According to this feature, as compared with a case where a protection member is provided as a separate component or formed by a specific working process, a number of parts can be reduced and a production process can be simplified.
In addition, a touch input signal from the resistive film can be taken out at an inside of the housing, through the conductive adhesive and the conductive pin. With this configuration, a conductive connection with the display device or the like disposed in the housing can be easily achieved.
Therefore, it is possible to further enhance productivity of the protection panel with a touch input function.

In a first feature of a method for manufacturing a protection panel with a touch input function according to the present invention in which a conductive portion is formed that allows a conductive connection between an electrode of a resistive film and an external terminal, there is provided a method including the steps of: connecting a front substrate which has a resistive film formed on a rear face of the front substrate and whose rim portion is decorated and a rear substrate including at least a glass plate which has a resistive film formed on a front face of the rear substrate and whose rim portion has through holes for electric conduction formed therein so that the resistive films are opposingly arranged with a predetermined gap; injecting a conductive adhesive into the through hole; after the injection of the conductive adhesive, filling the through hole with an insulating resin; after the insulating resin is cured, making a through hole penetrating through the insulating resin with a drill; and inserting a conductive pin into the through hole of the insulating resin.

According to this feature, since a glass plate having a higher strength and transmissivity than that of a resin plate is used for the rear substrate, there can be obtained a protection panel which is thinner and has higher visibility as compared with a case where a resin plate is used for the rear substrate.
By decorating the rim portion of the front substrate, the through hole formed in the rim portion of the rear substrate, the conductive adhesive injected into the through hole and the like can be concealed.
Upon making the through hole in the insulating resin with the drill, since the conductive adhesive has been already injected into the through hole of the rear substrate, the conductive adhesive is present on a front substrate side in the through hole of the rear substrate. Accordingly, without performing an operation control of the drill with high accuracy, a risk of damaging the front substrate with the drill can be easily prevented.
On the other hand, for example, in a case where the through hole of the rear substrate is filled with the insulating resin, a through hole is made in the cured insulating resin with a drill, and then the conductive adhesive is injected into the through hole in the insulating resin, during the process of making the through hole in the insulating resin with the drill, an operation control of the drill should be performed with high accuracy in order to prevent a risk of damaging the front substrate with the drill, since the conductive adhesive is not present on the front substrate side in the through hole of the rear substrate.
In other words, by injecting the conductive adhesive into the through hole of the rear substrate, further filling the same through hole with an insulating resin, and making a hole in the insulating resin, the risk of damaging the front substrate with the drill can be easily prevented.
Moreover, the conductive pin is inserted into the through hole of the rear substrate made of a glass plate, through the insulating resin. Accordingly, even when the insertion of the conductive pin is performed by press-fitting in order to surely prevent the conductive pin from coming off from the through hole, the inner wall of the through hole can be protected by the insulating resin. As a result, while a glass plate is used for the rear substrate, a risk of generating crack or fracture in the rear substrate that would otherwise be caused by the press-fitting of the conductive pin into the through hole of the rear substrate can be effectively suppressed.
In other words, the insulating resin functions as a protection member that can effectively suppress a risk of generating crack or fracture in the rear substrate that would otherwise be caused by the press-fitting when the conductive pin is press-fitted into the through hole of the rear substrate.
In addition, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
After the formation of the conductive portion, a touch input signal from the resistive film can be taken out from a rear face side of the rear substrate through the conductive adhesive and the conductive pin. With this configuration, it is not necessary to provide, as a conductive portion, a flexible print circuit (FPC) or the like extending from the electrode of the resistive film to a lateral side of the front substrate or the rear substrate, which is otherwise required in a case where a touch input signal from the resistive film is taken out from a lateral side of the front substrate or the rear substrate. As a result, enlargement in size of the protection panel can be suppressed, while the protection panel is still provided with a touch input function.
In addition, since the insulating resin is present between the inner wall of the through hole of the rear substrate and the conductive pin, on the rear face side of the rear substrate where a touch input signal from the resistive film is taken out, even when electrically conductive foreign matters, such as metal powder, are attached to the insulating resin, electrical leakage or the like that would otherwise be caused by the attached matters can be prevented.
Therefore, while enhancing thickness reduction and visibility of the protection panel with a touch input function, it is also possible to enhance productivity, durability, reliability and the like.

In a second feature of the method for manufacturing a protection panel with a touch input function according to the present invention in which a conductive portion is formed that allows a conductive connection between an electrode of a resistive film and an external terminal, there is provided a method including the steps of: connecting a front substrate which has a resistive film formed on a rear face of the front substrate and whose rim portion is decorated and a rear substrate including at least a glass plate which has a resistive film formed on a front face of the rear substrate and whose rim portion has through holes for electric conduction formed therein so that the resistive films are opposingly arranged with a predetermined gap; and injecting a conductive adhesive into the through hole, inserting a cylindrical protection member into the through hole, and inserting a conductive pin into the cylindrical protection member so that one end portion of the conductive pin is brought into contact with the injected conductive adhesive.

According to this feature, since a glass plate having a higher strength and transmissivity than that of a resin plate is used for the rear substrate, there can be obtained a protection panel which is thinner and has higher visibility as compared with a case where a resin plate is used for the rear substrate.
By decorating the rim portion of the front substrate, the through hole formed in the rim portion of the rear substrate, the conductive adhesive injected into the through hole and the like can be concealed.
Since the cylindrical protection member is inserted into the through hole of the rear substrate, a production process can be simplified, as compared with a case where a resin is injected into the through hole and a through hole is made in the cured resin with a drill to thereby form a cylindrical protection member.
Moreover, the conductive pin is inserted into the through hole of the rear substrate made of a glass plate, through the protection member. Accordingly, even when the insertion of the conductive pin is performed by press-fitting in order to surely prevent the conductive pin from coming off from the through hole, the inner wall of the through hole can be protected by the protection member. As a result, while a glass plate is used for the rear substrate, a risk of generating crack or fracture in the rear substrate that would otherwise be caused by the press-fitting of the conductive pin into the through hole of the rear substrate can be effectively suppressed.
In addition, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
After the formation of the conductive portion, a touch input signal from the resistive film can be taken out from a rear face side of the rear substrate through the conductive adhesive and the conductive pin. With this configuration, it is not necessary to provide, as a conductive portion, a flexible print circuit (FPC) or the like extending from the electrode of the resistive film to the lateral side of the front substrate or the rear substrate, which is otherwise required in a case where a touch input signal from the resistive film is taken out from a lateral side of the front substrate or the rear substrate. As a result, enlargement in size of the protection panel can be suppressed, while the protection panel is still provided with a touch input function.
Therefore, while enhancing thickness reduction and visibility of the protection panel with a touch input function, it is also possible to enhance productivity, durability, reliability and the like.

In a third feature of the method for manufacturing a protection panel with a touch input function according to the present invention in which a conductive portion is formed that allows a conductive connection between an electrode of a resistive film and an external terminal, there is provided a method including the steps of: connecting a front substrate which has a resistive film formed on a rear face of the front substrate and whose rim portion is decorated and a rear substrate including at least a glass plate which has a resistive film formed on a front face of the rear substrate and whose rim portion has through holes for electric conduction formed therein so that the resistive films are opposingly arranged with a predetermined gap; filling the through hole with a conductive adhesive; after the conductive adhesive is cured, making an insertion hole in the conductive adhesive with a drill; and inserting a conductive pin into the insertion hole.

According to this feature, since a glass plate having a higher strength and transmissivity than that of a resin plate is used for the rear substrate, there can be obtained a protection panel which is thinner and has higher visibility as compared with a case where a resin plate is used for the rear substrate.
By decorating the rim portion of the front substrate, the through hole formed in the rim portion of the rear substrate, the conductive adhesive injected into the through hole and the like can be concealed.
Since the through hole of the rear substrate is filled with the conductive adhesive, even when a depth of the insertion hole made with the drill is short, a high conductivity can be obtained. Accordingly, without performing an operation control of the drill with high accuracy, a risk of damaging the front substrate with the drill can be easily prevented.
Moreover, the conductive pin is inserted into the through hole of the rear substrate made of a glass plate, through the conductive adhesive. Accordingly, even when the insertion of the conductive pin is performed by press-fitting in order to surely prevent the conductive pin from coming off from the through hole, the inner wall of the through hole can be protected by the conductive adhesive. As a result, while a glass plate is used for the rear substrate, a risk of generating crack or fracture in the rear substrate that would otherwise be caused by the press-fitting of the conductive pin into the through hole of the rear substrate can be effectively suppressed.
In other words, the conductive adhesive functions as a protection member that can effectively suppress a risk of generating crack or fracture in the rear substrate that would otherwise be caused by the press-fitting when the conductive pin is press-fitted into the through hole of the rear substrate. With this configuration, as compared with a case where a protection member is provided as a separate component or formed by a specific working process, a number of parts can be reduced and a production process can be simplified.
In addition, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive exerted in an enlarged contact area. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
After the formation of the conductive portion, a touch input signal from the resistive film can be taken out from a rear face side of the rear substrate through the conductive adhesive and the conductive pin. With this configuration, it is not necessary to provide, as a conductive portion, a flexible print circuit (FPC) or the like extending from the electrode of the resistive film to a lateral side of the front substrate or the rear substrate, which is otherwise required in a case where a touch input signal from the resistive film is taken out from a lateral side of the front substrate or the rear substrate. As a result, enlargement in size of the protection panel can be suppressed, while the protection panel is still provided with a touch input function.
Therefore, while enhancing thickness reduction and visibility of the protection panel with a touch input function, it is also possible to enhance productivity, durability, reliability and the like.

In a fourth feature of the method for manufacturing a protection panel with a touch input function according to the present invention in which a conductive portion is formed that allows a conductive connection between an electrode of a resistive film and an external terminal, there is provided a method including the steps of: connecting a front substrate which has a resistive film formed on a rear face of the front substrate and whose rim portion is decorated and a rear substrate including at least a glass plate which has a resistive film formed on a front face of the rear substrate and whose rim portion has through holes for electric conduction formed therein so that the resistive films are opposingly arranged with a predetermined gap; injecting a conductive adhesive into the through hole; after the injection of the conductive adhesive, placing a stack of the front and rear substrates at a predetermined position in a mold for forming a mounting platform for putting the front and rear substrates in a display window formed in a housing of an electronic device so that a resin for molding the mounting platform is allowed to flow into the through hole; injecting a resin into the mold to form the mounting platform and an insert portion inserted into the through hole; after the formation, making a second through hole penetrating through the insert portion with a drill; and inserting a conductive pin into the second through hole of the insert portion.

According to this feature, since a glass plate having a higher strength and transmissivity than that of a resin plate is used for the rear substrate, there can be obtained a protection panel which is thinner and has higher visibility as compared with a case where a resin plate is used for the rear substrate.
By decorating the rim portion of the front substrate, the through hole formed in the rim portion of the rear substrate, the conductive adhesive injected into the through hole and the like can be concealed.
Upon making the through hole in the insert portion of the mounting platform with the drill, since the conductive adhesive has been already injected into the through hole of the rear substrate, the conductive adhesive is present on a front substrate side in the through hole of the rear substrate. Accordingly, without performing an operation control of the drill with high accuracy, a risk of damaging the front substrate with the drill can be easily prevented.
On the other hand, for example, in a case where the through hole of the rear substrate is filled with the insulating resin, a through hole is made in the cured insulating resin with a drill, and then the conductive adhesive is injected into the through hole in the insulating resin, during the process of making the through hole in the insulating resin with the drill, an operation control of the drill should be performed with high accuracy in order to prevent a risk of damaging the front substrate with the drill, since the conductive adhesive is not present on the front substrate side in the through hole of the rear substrate.
In other words, by injecting the conductive adhesive into the through hole of the rear substrate, further filling the same through hole with an insulating resin, and making a hole in the insulating resin, the risk of damaging the front substrate with the drill can be easily prevented.
Moreover, the conductive pin is inserted into the through hole of the rear substrate made of a glass plate, through the insert portion of the mounting platform. Accordingly, even when the insertion of the conductive pin is performed by press-fitting in order to surely prevent the conductive pin from coming off from the through hole, the inner wall of the through hole can be protected by the insert portion. As a result, while a glass plate is used for the rear substrate, a risk of generating crack or fracture in the rear substrate that would otherwise be caused by the press-fitting of the conductive pin into the through hole of the rear substrate can be effectively suppressed.
In other words, the insert portion of the mounting platform functions as a protection member that can effectively suppress a risk of generating crack or fracture in the rear substrate that would otherwise be caused by the press-fitting when the conductive pin is press-fitted into the through hole of the rear substrate. With this configuration, as compared with a case where a protection member is provided as a separate component or formed by a specific working process, a number of parts can be reduced and a production process can be simplified.
In addition, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
After the formation of the conductive portion, a touch input signal from the resistive film can be taken out from a rear face side of the rear substrate through the conductive adhesive and the conductive pin. With this configuration, it is not necessary to provide, as a conductive portion, a flexible print circuit (FPC) or the like extending from the electrode of the resistive film to a lateral side of the front substrate or the rear substrate, which is otherwise required in a case where a touch input signal from the resistive film is taken out from a lateral side of the front substrate or the rear substrate. As a result, enlargement in size of the protection panel can be suppressed, while the protection panel is still provided with a touch input function.
Therefore, while enhancing thickness reduction and visibility of the protection panel with a touch input function, it is also possible to enhance productivity, durability, reliability and the like.

In a fifth feature of the method for manufacturing a protection panel with a touch input function according to the present invention in which a conductive portion is formed that allows a conductive connection between an electrode of a resistive film and an external terminal, there is provided a method including the steps of: connecting a front substrate which has a resistive film formed on a rear face of the front substrate and whose rim portion is decorated and a rear substrate including at least a glass plate which has a resistive film formed on a front face of the rear substrate and whose rim portion has through holes for electric conduction formed therein so that the resistive films are opposingly arranged with a predetermined gap; injecting a conductive adhesive into the through hole; after the injection of the conductive adhesive, placing a stack of the front and rear substrates at a predetermined position in a mold for forming a mounting platform for putting the front and rear substrates in a display window formed in a housing of an electronic device so that a resin for molding the mounting platform is allowed to flow into the through hole; the mold being provided with a protrusion protruding into a center of the through hole so as to reach the conductive adhesive; injecting a resin into the mold to form the mounting platform and an insert portion which is inserted into the through hole and whose central portion has a second through hole; and after the formation, inserting a conductive pin into the second through hole of the insert portion.

According to this feature, since a glass plate having a higher strength and transmissivity than that of a resin plate is used for the rear substrate, there can be obtained a protection panel which is thinner and has higher visibility as compared with a case where a resin plate is used for the rear substrate.
By decorating the rim portion of the front substrate, the through hole formed in the rim portion of the rear substrate, the conductive adhesive injected into the through hole and the like can be concealed.
Since there is no need to make a through hole in the insert portion of the mounting platform with a drill, a production process can be simplified, as compared with a case where a through hole is made with a drill.
Moreover, the conductive pin is inserted into the through hole of the rear substrate made of a glass plate, through the insert portion of the mounting platform. Accordingly, even when the insertion of the conductive pin is performed by press-fitting in order to surely prevent the conductive pin from coming off from the through hole, the inner wall of the through hole can be protected by the insert portion. As a result, while a glass plate is used for the rear substrate, a risk of generating crack or fracture in the rear substrate that would otherwise be caused by the press-fitting of the conductive pin into the through hole of the rear substrate can be effectively suppressed.
In other words, the insert portion of the mounting platform functions as a protection member that can effectively suppress a risk of generating crack or fracture in the rear substrate that would otherwise be caused by the press-fitting when the conductive pin is press-fitted into the through hole of the rear substrate. With this configuration, as compared with a case where a protection member is provided as a separate component or formed by a specific working process, a number of parts can be reduced and a production process can be simplified.
In addition, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
After the formation of the conductive portion, a touch input signal from the resistive film can be taken out from a rear face side of the rear substrate through the conductive adhesive and the conductive pin. With this configuration, it is not necessary to provide, as a conductive portion, a flexible print circuit (FPC) or the like extending from the electrode of the resistive film to a lateral side of the front substrate or the rear substrate, which is otherwise required in a case where a touch input signal from the resistive film is taken out from a lateral side of the front substrate or the rear substrate. As a result, enlargement in size of the protection panel can be suppressed, while the protection panel is still provided with a touch input function.
Therefore, while enhancing thickness reduction and visibility of the protection panel with a touch input function, it is also possible to enhance productivity, durability, reliability and the like.

In a sixth feature of the method for manufacturing a protection panel with a touch input function according to the present invention in which a conductive portion is formed that allows a conductive connection between an electrode of a resistive film and an external terminal, there is provided a method including the steps of: connecting a front substrate which has a resistive film formed on a rear face of the front substrate and whose rim portion is decorated and a rear substrate including at least a glass plate which has a resistive film formed on a front face of the rear substrate and whose rim portion has through holes for electric conduction formed therein so that the resistive films are opposingly arranged with a predetermined gap; injecting a conductive adhesive into the through hole; after the injection of the conductive adhesive, placing a stack of the front and rear substrates at a predetermined portion in a mold for forming a housing of an electronic device so that a resin for molding the housing is allowed to flow into the through hole, injecting a resin into the mold to form the housing and an insert portion inserted into the through hole; after the formation, making a second through hole penetrating through the insert portion with a drill; and inserting a conductive pin into the second through hole of the insert portion.

According to this feature, since a glass plate having a higher strength and transmissivity than that of a resin plate is used for the rear substrate, there can be obtained a protection panel which is thinner and has higher visibility as compared with a case where a resin plate is used for the rear substrate.
By decorating the rim portion of the front substrate, the through hole formed in the rim portion of the rear substrate, the conductive adhesive injected into the through hole and the like can be concealed.
Upon making the through hole in the insert portion of the housing with the drill, since the conductive adhesive has been already injected into the through hole of the rear substrate, the conductive adhesive is present on a front substrate side in the through hole of the rear substrate. Accordingly, without performing an operation control of the drill with high accuracy, a risk of damaging the front substrate with the drill can be easily prevented.
On the other hand, for example, in a case where the through hole of the rear substrate is filled with the insulating resin, a through hole is made in the cured insulating resin with a drill, and then the conductive adhesive is injected into the through hole in the insulating resin, during the process of making the through hole in the insulating resin with the drill, an operation control of the drill should be performed with high accuracy in order to prevent a risk of damaging the front substrate with the drill, since the conductive adhesive is not present on the front substrate side in the through hole of the rear substrate.
In other words, by injecting the conductive adhesive into the through hole of the rear substrate, further filling the same through hole with an insulating resin, and making a hole in the insulating resin, the risk of damaging the front substrate with the drill can be easily prevented.
Moreover, the conductive pin is inserted into the through hole of the rear substrate made of a glass plate, through the insert portion of the housing. Accordingly, even when the insertion of the conductive pin is performed by press-fitting in order to surely prevent the conductive pin from coming off from the through hole, the inner wall of the through hole can be protected by the insert portion. As a result, while a glass plate is used for the rear substrate, a risk of generating crack or fracture in the rear substrate that would otherwise be caused by the press-fitting of the conductive pin into the through hole of the rear substrate can be effectively suppressed.
In other words, the insert portion of the housing functions as a protection member that can effectively suppress a risk of generating crack or fracture in the rear substrate that would otherwise be caused by the press-fitting when the conductive pin is press-fitted into the through hole of the rear substrate. With this configuration, as compared with a case where a protection member is provided as a separate component or formed by a specific working process, a number of parts can be reduced and a production process can be simplified.
In addition, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
After the formation of the conductive portion, a touch input signal from the resistive film can be taken out at an inside of the housing, through the conductive adhesive and the conductive pin. With this configuration, a conductive connection with the display device or the like disposed in the housing can be easily achieved.
Therefore, while enhancing thickness reduction and visibility of the protection panel with a touch input function, it is also possible to enhance productivity, durability, reliability and the like.

In a seventh feature of the method for manufacturing a protection panel with a touch input function according to the present invention in which a conductive portion is formed that allows a conductive connection between an electrode of a resistive film and an external terminal, there is provided a method including the steps of: connecting a front substrate which has a resistive film formed on a rear face of the front substrate and whose rim portion is decorated and a rear substrate including at least a glass plate which has a resistive film formed on a front face of the rear substrate and whose rim portion has through holes for electric conduction formed therein so that the resistive films are opposingly arranged with a predetermined gap; injecting a conductive adhesive into the through hole; after the injection of the conductive adhesive, placing a stack of the front and rear substrates at a predetermined position in a mold for forming a housing of an electronic device so that a resin for molding the housing is allowed to flow into the through hole, the mold being provided with a protrusion protruding into a center of the through hole so as to reach the conductive adhesive; injecting a resin into the mold to form the housing and an insert portion which is inserted into the through hole and whose central portion has a second through hole; and after the formation, inserting a conductive pin into the second through hole of the insert portion.

According to this feature, since a glass plate having a higher strength and transmissivity than that of a resin plate is used for the rear substrate, there can be obtained a protection panel which is thinner and has higher visibility as compared with a case where a resin plate is used for the rear substrate.
By decorating the rim portion of the front substrate, the through hole formed in the rim portion of the rear substrate, the conductive adhesive injected into the through hole and the like can be concealed.
Since there is no need to make a through hole in the insert portion of the housing with a drill, a production process can be simplified, as compared with a case where a through hole is made with a drill.
Moreover, the conductive pin is inserted into the through hole of the rear substrate made of a glass plate, through the insert portion of the housing. Accordingly, even when the insertion of the conductive pin is performed by press-fitting in order to surely prevent the conductive pin from coming off from the through hole, the inner wall of the through hole can be protected by the insert portion. As a result, while a glass plate is used for the rear substrate, a risk of generating crack or fracture in the rear substrate that would otherwise be caused by the press-fitting of the conductive pin into the through hole of the rear substrate can be effectively suppressed.
In other words, the insert portion of the housing functions as a protection member that can effectively suppress a risk of generating crack or fracture in the rear substrate that would otherwise be caused by the press-fitting when the conductive pin is press-fitted into the through hole of the rear substrate. With this configuration, as compared with a case where a protection member is provided as a separate component or formed by a specific working process, a number of parts can be reduced and a production process can be simplified.
In addition, since the insertion of the conductive pin into the through hole of the rear substrate can be performed by press-fitting, the prevention of the conductive pin from coming off from the through hole can be attained by a pressure generated between the inner wall of the through hole and the conductive pin as well as the adhesion force of the conductive adhesive. With this configuration, as compared with a case where the conductive pin is prevented from coming off from the through hole solely by the adhesion force of the conductive adhesive, a state in which the conductive pin forms a connection with the electrode of the resistive film can be retained for a long period of time.
After the formation of the conductive portion, a touch input signal from the resistive film can be taken out at an inside of the housing, through the conductive adhesive and the conductive pin. With this configuration, a conductive connection with the display device or the like disposed in the housing can be easily achieved.
Therefore, while enhancing thickness reduction and visibility of the protection panel with a touch input function, it is also possible to enhance productivity, durability, reliability and the like.

### Brief description of drawings

Fig. 1 is a perspective view of a mobile-phone.
Fig. 2 is a vertical cross section of an essential portion showing a structure of a protection panel.
Fig. 3 is a vertical sectional side view of an essential portion showing a conductive structure of a rear substrate according to a first embodiment.
Fig. 4 is a vertical sectional side view of an essential portion showing a conductive structure of a front substrate according to the first embodiment.
Fig. 5 is a front view of the rear substrate.
Fig. 6 is a rear view of the front substrate.
Fig. 7 is a vertical sectional side view of an essential portion showing a configuration of a protection panel according to the first embodiment.
Fig. 8 is a vertical sectional side view of the essential portion showing the configuration of the protection panel according to the first embodiment.
Fig. 9 is a vertical sectional side view of an essential portion showing a configuration of a protection panel according to a second embodiment.
Fig. 10 is a vertical sectional side view of the essential portion showing the configuration of the protection panel according to the second embodiment.
Fig. 11 is a vertical sectional side view of an essential portion showing a configuration of a protection panel according to a third embodiment.
Fig. 12 is a vertical sectional side view of the essential portion showing the configuration of the protection panel according to the third embodiment.
Fig. 13 is a vertical sectional side view of an essential portion showing a conductive structure between an electrode of a front substrate of the protection panel and an external terminal according to the third and fourth embodiments.
Fig. 14 is a vertical sectional side view of an essential portion showing a conductive structure between an electrode of a rear substrate of the protection panel and an external terminal according to the third and fourth embodiments.
Fig. 15 is a vertical sectional side view of an essential portion showing a configuration of a protection panel according to a fourth embodiment.
Fig. 16 is a vertical sectional side view of the essential portion showing the configuration of the protection panel according to the fourth embodiment.
Fig. 17 is a vertical sectional side view of an essential portion showing a configuration of a protection panel according to a fifth embodiment.
Fig. 18 is a vertical sectional side view of an essential portion showing a configuration of a protection panel according to a sixth embodiment.
Fig. 19 is a vertical sectional side view of an essential portion showing a configuration of a protection panel according to a seventh embodiment.

### Best mode for carrying out the invention

### <First embodiment>

Hereinafter, as one example of the best mode for carrying out the present invention, a first embodiment in which a protection panel A with a touch input function according to the present invention is applied to a mobile-phone 1 as one example of an electronic device B will be described with reference to the drawings.

In addition to the mobile-phone 1, examples of the electronic device B include smartphone, PDA, car navigation equipment, digital camera, digital video camera, portable gaming device and tablet.

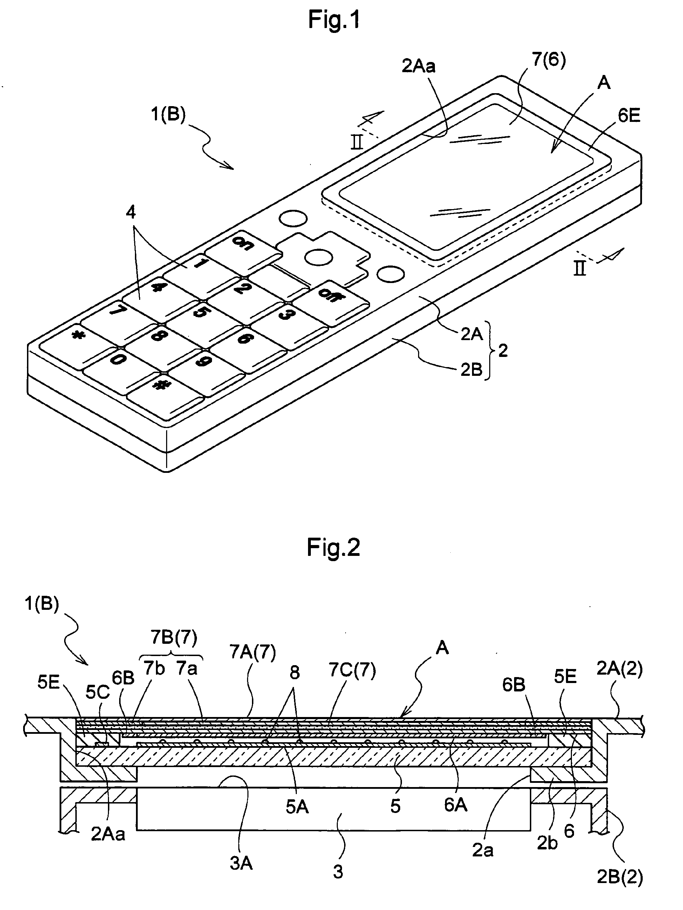

Fig. 1 is an overall perspective view of the mobile-phone 1. Fig. 2 is a vertical sectional view of an essential portion of the mobile-phone 1. As shown in these drawings, the mobile-phone 1 is composed of: a housing 2 made of a thermoplastic resin, such as polycarbonate (PC) and acrylic resin (PMMA); a display device 3 having a display part 3A of crystalline liquid or organic EL; a plurality of input keys 4; and the like. The housing 2 includes: a front housing part 2A having a display window 2Aa formed in a front face; and a rear housing part 2B to which the display device 3 or the like is to be attached. The protection panel A is provided in the display window 2Aa of the front housing part 2A so as to protect the display part 3A of the display device 3.

The display window 2Aa of the front housing part 2A is formed as a recess that has a step which allows the protection panel A to be fitted into the recess. A bottom portion of the display window 2Aa is configured to have: an opening 2a for externally orienting the display part 3A of the display device 3 installed in the rear housing part 2B; and a support frame 2b for supporting the protection panel A.

A shape and a size of the display window 2Aa may vary depending on a shape and a size of the protection panel A. A recess depth of the display window 2Aa may vary depending on a thickness or the like of the protection panel A. A shape and a size of the opening 2a of the display window 2Aa may vary depending on a shape and a size of the display part 3A. Herein, the shapes of the display window 2Aa, the opening 2a, the display part 3A and the protection panel A are set as a rectangle or approximate rectangle. In addition, the recess depth of the display window 2Aa is set in such a manner that a surface of the housing 2 is in the same plane as a surface of the protection panel A.

A touch input mechanism of the protection panel A means a mechanism for detecting an X-Y coordinate defined as an operation position, based on the touch operation relative to the surface of the protection panel A. Examples of a touch input method include a resistive film method and a capacitance method, and the resistive film method is used herein.

As shown in Figs. 2 to 6, the protection panel A includes: a rear substrate 5 having a rectangular resistive film 5A formed on a front face of the rear substrate 5; and a front substrate 6 having a rectangular resistive film 6A formed on a rear face of the front substrate 6, the resistive films 5A,6A being opposingly arranged with a predetermined gap in such a manner that an air layer is formed between the films.

Referring to Figs. 2 to 5, as the rear substrate 5, a glass plate is used which is excellent in a strength and transmissivity, such as soda glass, borosilicate glass and toughened glass. By using a glass plate which is excellent in a strength, it becomes possible to reduce a thickness of the protection panel A by reducing a thickness of the rear substrate 5, and thus to reduce a thickness of the mobile-phone 1 having the protection panel A. The thickness of the glass plate may be selected from a range of 0.2 to 3.0 mm, and preferably is 1.0 mm.

In a left lower area of a rim portion of the rear substrate 5, four through holes 5a,5b for electric conduction, each penetrating through the rear substrate 5 from the front face to a rear face, are aligned in a transversal direction with predetermined intervals. On the front face of the rear substrate 5, in addition to the resistive film 5A, there are formed: a pair of bus bars 5B arranged in parallel on opposing sides of the resistive film 5A in a Y direction; a pair of routing circuits 5C located at positions around the resistive film 5A; a pair of electrodes 5D located at positions corresponding to the positions of the through holes 5a; and an adhesion layer 5E in a shape of a frame.

With respect to the rear substrate 5, there may be prepared a transparent insulation film whose front face has the resistive film 5A, a pair of the bus bars 5B, a pair of the routing circuits 5C, a pair of the electrodes 5D and the adhesion layer 5E in a shape of a frame, and then a rear face of the transparent insulation film may be attached to the front face of the rear substrate 5 to thereby prepare the rear substrate 5 having the resistive films 5A, a pair of the bus bars 5B, a pair of the routing circuits 5C, a pair of the electrodes 5D and the adhesion layer 5E in a shape of a frame, all formed on the front face of the rear substrate 5.

In the case where the transparent insulation film is used, examples of the transparent insulation film include those made of engineering plastics, such as polycarbonates, polyamides and polyetherketones; and resin films, such as those made of acryl, polyethylene terephthalate and polybutylene terephthalate.

Referring to Figs. 2 to 4 and 6, for the front substrate 6, a flexible transparent insulation film is used that is deflectable when pressed by a finger or the like. Examples of the flexible transparent insulation film include those made of engineering plastics, such as polycarbonates, polyamides and polyetherketones; and resin films, such as those made of acryl, polyethylene terephthalate and polybutylene terephthalate.

On the rear face of the front substrate 6, in addition to the resistive film 6A, there are formed: a pair of bus bars 6B arranged in parallel on opposing sides of the resistive film 6A in an X direction; a pair of routing circuits 6C located at positions around the resistive film 6A; and a pair of electrodes 6D facing the corresponding through holes 5b. On a front face of the front substrate 6, a design sheet 7 is laminated.

Referring to Figs. 2 to 6, each of the resistive films 5A,6A may be a transparent conductive film made of: a film of metal oxide, such as tin oxide, indium oxide, antimony oxide, zinc oxide, cadmium oxide, and indium tin oxide (ITO); composite films mainly composed of these metal oxides; or alternatively, a film of metal, such as gold, silver, copper, tin, nickel, aluminum and palladium. It should be noted that each of the resistive films 5A,6A may be formed as a multilayer with two or more layers. Examples of a method for forming each of the resistive films 5A,6A include vacuum deposition method, sputtering method, ion plating method and CVD method.

As shown in Figs. 2 to 5, on one surface of either of the resistive films 5A,6A, a plurality of fine dot-shaped spacers 8 may be formed, in order to prevent erroneous contact between the resistive films 5A,6A when they are arranged opposedly. Herein, a plurality of the spacers 8 are formed on the resistive film 5A of the rear substrate 5.

Examples of the spacer 8 include: a transparent light curing resin, such as epoxy acrylates and urethane acrylates, and a transparent thermohardening resin, such as polyesters and epoxys. As a fabrication method of the spacer 8, there can be mentioned a printing method, such as screen printing and photoprocess.

Referring to Figs. 2 to 6, each of the bus bars 5B,6B, each of the routing circuits 5C,6C, and each of the electrodes 5D,6D may be made of a conductive paste of metals, e.g., gold, silver, copper and nickel, or alternatively, a paste of carbon. Examples of a method for fabricating each of the bus bars 5B,6B, each of the routing circuits 5C,6C and each of the electrodes 5D,6D include printing method, such as screen printing, offset printing, gravure printing and flexographic printing; photoresist method; and brush painting method.

The bus bar 5B(6B) is typically formed at a position as close as possible to an edge of the rear substrate 5 (front substrate 6), so as to secure an area with no bus bars 5B(6B) as large as possible at a middle portion of the rear substrate 5 (front substrate 6). A size and a shape of the area with no bus bars 5B,6B, in other words, an input area or display area, may vary depending on a size and a shape of an input area or display area of the electronic device B, such as the mobile-phone 1.

Referring to Figs. 1 to 4, examples of the design sheet 7 include those made of engineering plastic, such as polycarbonates, polyamides and polyetherketones; and transparent films, such as those made of acryl, polyethylene terephthalate and polybutylene terephthalate. A thickness of the transparent film may be selected from 25 to 200 µm.

The design sheet 7 includes: a hard coating layer 7A formed on a front side; and a decorative layer 7B and an adhesion layer 7C formed on a rear side.

Examples of a material for the hard coating layer 7A include inorganic material, such as siloxane resin, and organic material, such as thermohardening resin containing acrylic epoxy or urethane, and light curing resin containing acrylate. A preferable thickness of the hard coating layer is approximately 1 to 7 µm. Examples of a method for fabricating the hard coating layer 7A include coating method, such as roll coating and spray coat, and regular printing method, such as screen printing, offset printing, gravure printing and flexographic printing.

The hard coating layer 7A may be directly formed on a front face of a transparent sheet on whose rear face the decorative layer 7B and the adhesion layer 7C are directly formed, or alternatively, the hard coating layer 7A may be formed on a separate transparent sheet different from the design sheet 7 on whose rear face the decorative layer 7B and the adhesion layer 7C are directly formed, and these transparent sheets may be stuck together.

With respect to the design sheet 7, a nonglare treatment may be performed in order to prevent light reflection. For example, an emboss-like pattern may be formed on the transparent sheet or the hard coating layer 7A, or alternatively, fine particles as extender pigment, such as silica and alumina, may be mixed in the hard coating layer 7A.

The decorative layer 7B is provided with a decorative portion 7b in a shape of a frame so that a rectangular transparent portion 7a is formed at a center of the decorative layer 7B. A size and a shape of the area of the transparent portion 7a may vary depending on sizes and shapes of input areas or display areas of the rear substrate 5 and the front substrate 6 with no bus bars 5B,6B nor no routing circuits 5C,6C, in other words, depending on a size and a shape of an input area or display area of the electronic device B, such as the mobile-phone 1.

By forming the decorative layer 7B in this manner, a rim portion 6E of the front substrate 6 is provided with decoration that can hide the bus bars 5B,6B of the rear substrate 5 and the front substrate 6. With this configuration, there is no need to provide a frame portion in the display window 2Aa of the housing 2 for the purpose of hiding the bus bars 5B,6B of the rear substrate 5 and the front substrate 6 and the like, and by that amount, the thickness of the mobile-phone 1 can be reduced.

For the decorative layer 7B, a colored ink is preferably used, which includes: polyvinyl resin, polyamide resin, polyester resin, polyacrylic resin, polyurethane resin, polyvinyl acetal resin, polyester urethane resin or alkyd resin as a binder; and pigment or dye of an appropriate color as a coloring agent.

Examples of a method for fabricating the decorative layer 7B include regular printing method, such as screen printing, offset printing, gravure printing and flexographic printing. Especially, for polychrome printing and gradation expression, the offset printing and the gravure printing are preferable.

The decorative layer 7B may also be a metal film layer, or alternatively, a combination of a picture print layer and a metal film layer. The metal film layer as the decorative layer 7B is for expressing metallic luster and is formed by vacuum deposition method, sputtering method, ion plating method, plating method or the like. In this case, depending on the desired color of metallic luster, a metal may be selected from, for example, aluminum, nickel, gold, platinum, ferrochrome, copper, tin, indium, silver, titanium, lead and zinc, and alloys or compounds thereof. Typically, a thickness of the metal film layer is approximately 0.05 µm. Moreover, upon forming the metal film layer, a front anchor layer or a rear anchor layer may be provided for the purpose of enhancing adhesiveness with other layers.

For the adhesion layer 7C, a thermosensitive or pressure-sensitive resin suitable for applying to the front substrate 6 and the design sheet 7 is appropriately selected. For example, when the front substrate 6 and the design sheet 7 are made of polycarbonates or polyamides, the adhesion layer 7C may be made of polyacrylic resin, polystyrene resin, polyamide resin or the like. When the front substrate 6 and the design sheet 7 are made of acrylates or polyethylene terephthalates, the adhesion layer 7C may be made of vinyl chloride, vinyl acetate, acrylic copolymer or the like.

Examples of a method for fabricating the adhesion layer 7C include regular printing method, such as screen printing, offset printing, gravure printing and flexographic printing.

The front substrate 6 may not be provided with the design sheet 7. In the case where the design sheet 7 is not present, the hard coating layer 7A may be formed on the front face of the front substrate 6. In the case where the design sheet 7 is not present and a nonglare treatment is performed, an emboss-like pattern may be formed on the front face of the front substrate 6 or hard coating layer 7A, or alternatively, fine particles as extender pigment, such as silica and alumina, may be mixed in the hard coating layer 7A.

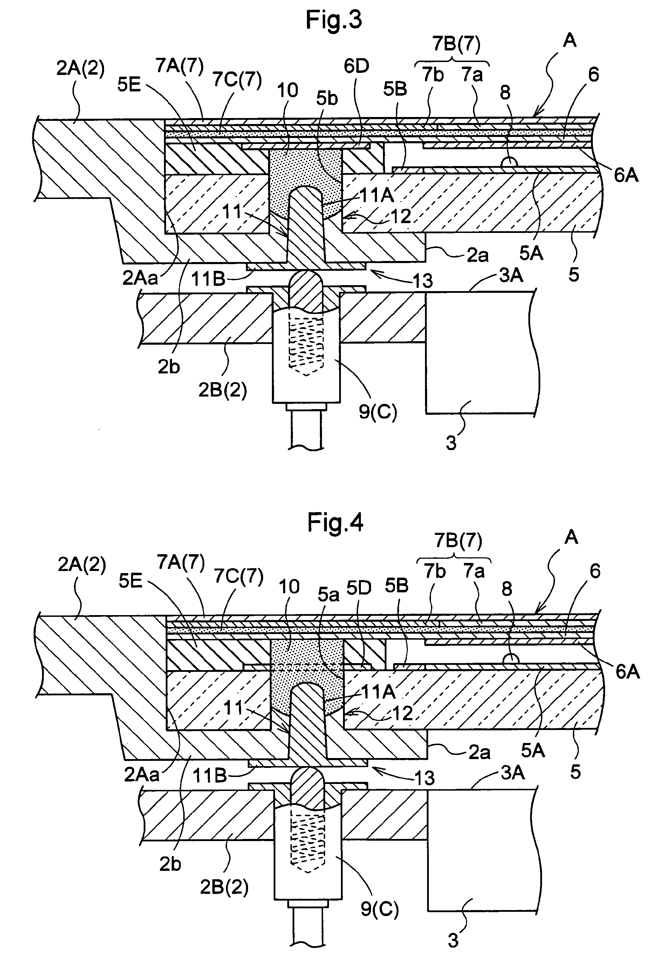

As shown in Figs. 3 and 4, the rear housing part 2B is equipped with four spring connector pins 9 as external terminal C, at positions opposing to the respective through holes 5a,5b of the rear substrate 5. Each spring connector pin 9 is conductively connected to an interface (not shown) of the display device 3.

Each of the electrodes 5D of the rear substrate 5 and the electrodes 6D of the front substrate 6 is conductively connected to the corresponding spring connector pin 9, utilizing the corresponding through hole 5a or 5b of the rear substrate 5.

Into each of the through holes 5a,5b, a conductive adhesive 10 made of a conductive paste is injected in such a manner that the through holes are conductively brought into contact with the respective electrodes 5D,6D, and a conductive pin 11 having a head portion is inserted in such a manner that one end portion 11A thereof is conductively brought into contact with the conductive adhesive 10. Between an inner wall of each of the through holes 5a,5b and the conductive pin 11, there is provided a cylindrical protection member 12 made of a thermoplastic resin, for the purpose of allowing press-fitting of the conductive pin 11 into each of the through holes 5a,5b. The protection member 12 is integrally formed with the support frame 2b of the front housing part 2A for supporting the rear substrate 5, by injection molding.

On the other end portion 11B of each conductive pin 11, a head portion 11 B in a shape of a disk is formed, and when the conductive pin 11 is fully inserted into the corresponding through hole 5a or 5b, the head portion 11B is exposed on a rear face of the front housing part 2A. With this configuration, a touch input signal from the resistive films 5A,6A can be taken out from a rear face side of the front housing part 2A. When the front housing part 2A and the rear housing part 2B are joined, the head portion 11B of each conductive pin 11 functions as a flat terminal for connecting with the corresponding spring connector pin 9.

In other words, by the conductive adhesive 10 injected into each of the through holes 5a,5b and the conductive pin 11 inserted into each of the through holes 5a,5b, there is formed an conductive portion 13 that allows a conductive connection between the electrode 5D of the rear substrate 5 or the electrode 6D of the front substrate 6 and the corresponding spring connector pin 9. With this configuration, a touch input signal from each of the resistive films 5A,6A can be input to the display device 3.

In addition, since the protection member 12 is introduced between the inner wall of each of the through holes 5a,5b and the conductive pin 11, when the conductive pin 11 is press-fitted into each of the through holes 5a,5b, the press-fitting is performed through the protection member 12, and thus a pressure acting on the inner wall of each of the through holes 5a,5b generated as the conductive pin 11 is press-fitted is reduced by the protection member 12.

Consequently, as compared with a case where the conductive pin 11 is directly press-fitted into each of the through holes 5a,5b of the rear substrate 5 made of a glass plate, it becomes possible to remarkably reduce a risk of crack or fracture in the rear substrate 5 which would otherwise be caused by the press-fitting. In addition, by using a thermoplastic resin for the protection member 12, press-fitting of the conductive pin 11 into each of the through holes 5a,5b can be performed using ultrasonic melting. With this configuration, it becomes possible to further reduce the risk of crack or fracture in the rear substrate 5, when the conductive pin 11 is press-fitted into each of the through holes 5a,5b. After the press-fitting of each conductive pin 11, because of a pressure generated between the inner wall of each of the through holes 5a,5b and the corresponding conductive pins 11, as well as an adhesion force of the conductive adhesive 10, a state in which the conductive pin 11 forms a connection with the corresponding electrode 5D or 6D can be retained for a long period of time.

A diameter of each of the through holes 5a,5b is preferably 0.1 to 1.0 mm. When the diameter of each through hole 5a is below 0.1 mm, it may become impossible to secure conduction in each through hole 5a. When the diameter of each through hole 5a is above 1.0 mm, the conductive adhesive 10 may not be excellently injected into each of the through holes 5a,5b, and an amount of the conductive adhesive 10 may become larger, leading to poor cost performance.

Examples of the conductive paste to be used for the conductive adhesive 10 include silver paste and copper paste. Examples of a method for injecting the conductive adhesive 10 includes coating using a dispenser and screen printing. In addition to the injection of the conductive adhesive 10, a film made of nickel or the like may be formed on the inner wall of each of the through holes 5a,5b, by non-electrolytic plating or electrolytic plating.

The head portion 11B of the conductive pin 11 has a thickness of 20 to 200 µm. Instead of having the head portion 11B, the conductive pin 11 may be a female type having a recess, or a male type having a protrusion. For the conductive pin 11, there can be mentioned a metal pin made of copper, iron, nickel, aluminum or stainless steel. In the conductive pin 11, it is preferable that gold plating is performed on at least both end portions which come into contact with the conductive adhesive 10 or the spring connector pin 9.

As the external terminal C, there can be adopted a flexible print circuit (hereinafter, simply referred to as "FPC") formed of a polyimide film on whose one side a circuit made of copper foil is fabricated, and a terminal electrode portion of the FPC may be conductively connected to the electrodes 5D of the rear substrate 5 and the electrodes 6D of the front substrate 6 through the conductive portion 13.

Hereinafter, with reference to Figs. 2 to 8, a configuration of the resistive film type protection panel A with a touch input function illustrated in the present embodiment will be described in detail.

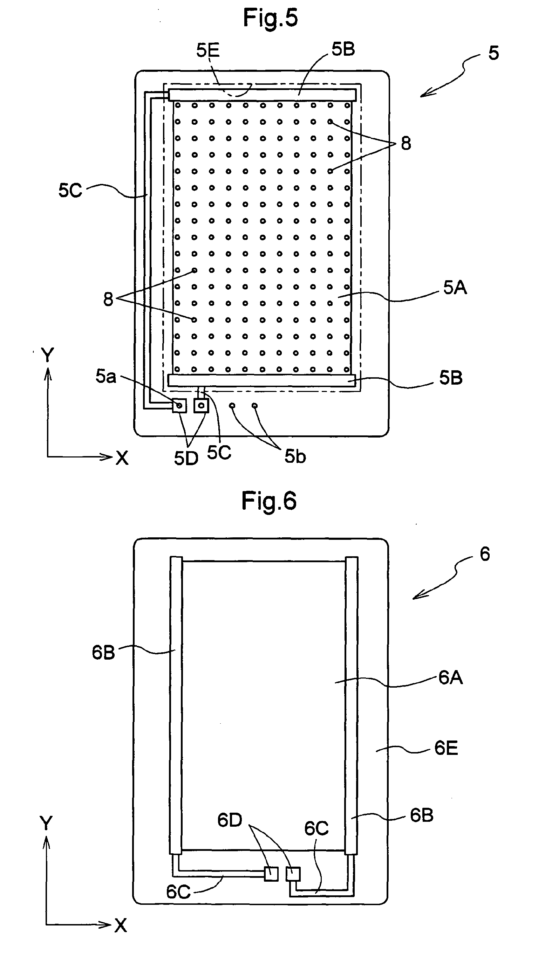

First, to one side of a rolled-up flexible transparent insulation film formed of a polyethylene terephthalate film (hereinafter, simply referred to as "PET film") having a thickness of 75 µm, ultraviolet curing acrylic hard coating is applied using a roll coater, to thereby obtain a PET film with hard coating on one side. Then, on the surface with hard coating, an indium tin oxide film (hereinafter, simply referred to as "ITO film") is formed by sputtering.
Next, the PET film is cut into a sheet so as to have a predetermined 2-dimensional size, and then etching resist in a pattern is applied onto the ITO film by screen printing, and unnecessary portions of the ITO film are removed by sulfuric acid to thereby form the rectangular resistive film 6A.
After the etching, the resist is removed by alkali washing, and on opposing sides of the resistive film 6A in the X direction are formed a pair of the bus bars 6B arranged in parallel, and on a portion in a surrounding area are formed a pair of the routing circuits 6C and a pair of the electrodes 6D, by screen printing using a silver paste. The position of each electrode 6D is set so as to face the corresponding through hole 5b.
With this configuration, the front substrate 6 is obtained whose rear face is provided with the resistive film 6A, a pair of the bus bars 6B, a pair of the routing circuits 6C and a pair of the electrodes 6D (see Fig. 6).

Next, to both sides of a rolled-up transparent film formed of a PET film having a thickness of 125 µm, ultraviolet curing acrylic hard coating is applied using a roll coater, to thereby obtain a PET film with hard coating on both sides.
Then, the PET film is cut into a sheet so as to have the same 2-dimensional size as that of the front substrate 6, and on one side thereof, there are formed by gravure printing the decorative layer 7B provided with the rectangular transparent portion 7a in the center and the decorative portion 7b in a shape of a frame that surrounds the rectangular transparent portion 7a, and the adhesion layer 7C made of a transparent adhesive mainly composed of acrylic acid ester.
With this configuration, the design sheet 7 is obtained which is provided with the hard coating layer 7A on the front side, and with the decorative layer 7B and the adhesion layer 7C on the rear side.

Then, the whole surfaces of the obtained front substrate 6 and design sheet 7 are stuck together in such a manner that a face with no ITO film (front face) of the front substrate 6 is opposed to a face with a decorative layer (rear face) of the design sheet 7 through the adhesion layer 7C of the design sheet 7.
With this configuration, the front substrate 6 having the decorated rim portion 6E can be obtained.

On the other hand, on one face of a soda glass plate having a thickness of 1.0 mm which has the same 2-dimensional size as that of the front substrate 6 and has four through holes 5a,5b in the left lower area of the rim portion, an ITO film is formed by sputtering.
Subsequently, etching resist in a pattern is applied onto the ITO film by screen printing, and unnecessary portions of the ITO film are removed by sulfuric acid to thereby form the rectangular resistive film 5A.
Next, on an entire face of the resistive film 5A, a plurality of the fine dot-shaped spacers 8 are formed by screen printing using an epoxy acrylate-containing thermohardening resin. In addition, on opposing sides of the resistive film 5A in the Y direction are formed a pair of the bus bars 5B arranged in parallel, and on a portion in a surrounding area are formed a pair of the routing circuits 5C and a pair of the electrodes 5D, by screen printing using a silver paste. The position of each electrode 5D is set so as to correspond to the position of the through hole 5a.
Then, an adhesive ink mainly composed of acrylic acid ester is applied onto the rim portion of the soda glass plate by screen printing in such a manner that the through holes 5a,5b are not closed to thereby form the adhesion layer 5E in a shape of a frame.
With this configuration, the rear substrate 5 is obtained whose front face is provided with the resistive film 5A, a pair of the bus bars 5B, a pair of the routing circuits 5C, a pair of the electrodes 5D, and the adhesion layer 5E (see Fig. 5).

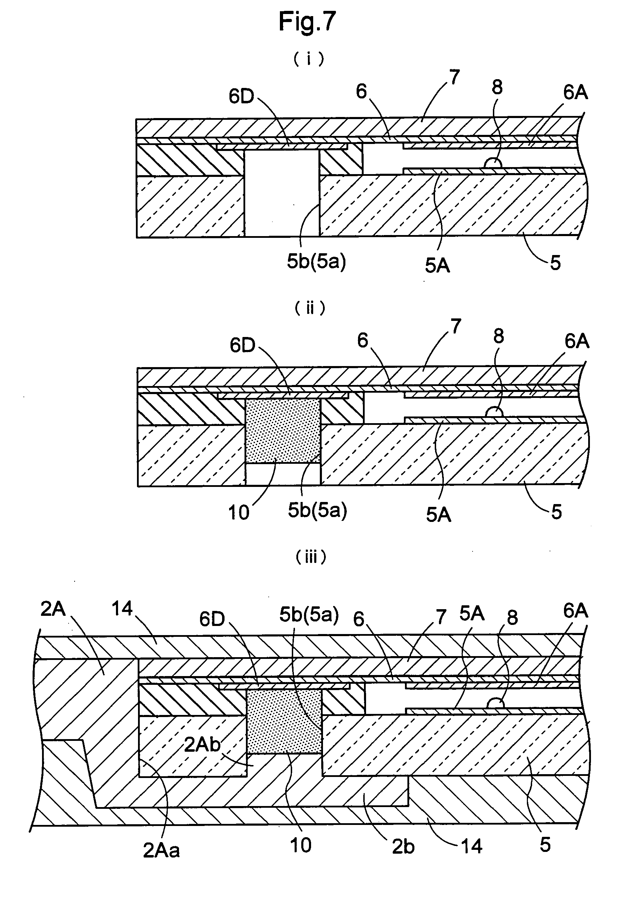

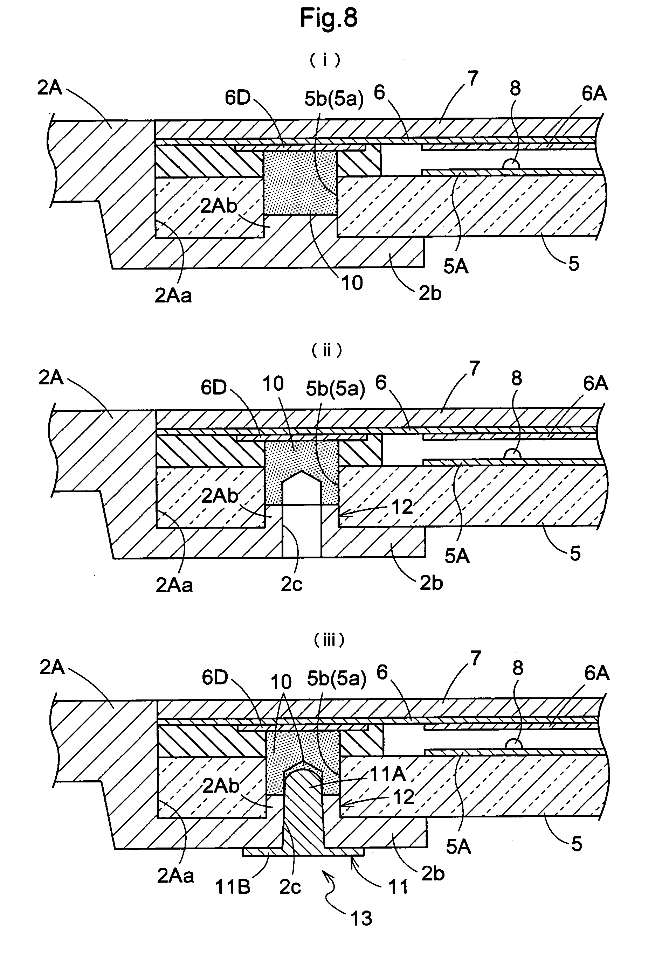

Then, the front substrate 6 laminated with the design sheet 7 is stuck to the rear substrate 5 through the adhesion layer 5E of the rear substrate 5, in such a manner that the resistive films 5A,6A are opposed to each other through an air layer, the bus bars 5B,6B are arranged orthogonal to each other, and the electrode 6D of the front substrate 6 closes a front face side of the corresponding through hole 5b (see Fig. 7 (i)).
Next, on an electrode 5D(6D) side in the through hole 5a(5b), a silver paste as the conductive adhesive 10 is injected with a dispenser (see Fig. 7 (ii)).
After the injection, a stack of the rear substrate 5 and the front substrate 6 is placed at a predetermined position in a mold 14 for injection-molding the front housing part 2A, in such a manner that an acrylic resin for molding the front housing part is allowed to flow into the through holes 5a,5b.
After placing the stack, an acrylic resin is injected into a molding space for the front housing part in the mold 14 and then cured (see Fig. 7 (iii)).
With this configuration, the front housing part 2A can be obtained which has an insert portion 2Ab inserted into each of the through holes 5a,5b of the rear substrate 5, with the rear substrate 5 and the front substrate 6 fitted into the display window 2Aa (see Fig.8(i)).

Next, a through hole 2c that penetrates through a center portion of the insert portion 2Ab of the front housing part 2A is made with a drill to thereby form the cylindrical protection member 12 fitted into each of the through holes 5a,5b (see Fig. 8 (ii)).
After the formation, on the electrode 5D(6D) side in the protection member 12 (through hole 2c), a silver paste as the conductive adhesive 10 is added using a dispenser.
After the addition, by ultrasonic melting using a ultrasonic press-fitting device, the conductive pin 11 having the head portion is press-fitted into each of the through holes 5a,5b through the protection member 12, in such a manner that one end portion 11A reaches the conductive adhesive 10, to thereby form the conductive portion 13 that allows a conductive connection between the electrode 5D of the rear substrate 5 or the electrode 6D of the front substrate 6 and the corresponding spring connector pin 9 as the external terminal C provided on the rear housing part 2B, and to allow a touch input signal from the resistive films 5A,6A to be taken out.

With this configuration, the protection panel A with a touch input function uniformly provided in the front housing part 2A can be obtained (see Fig. 8 (iii)).

### <Second embodiment>

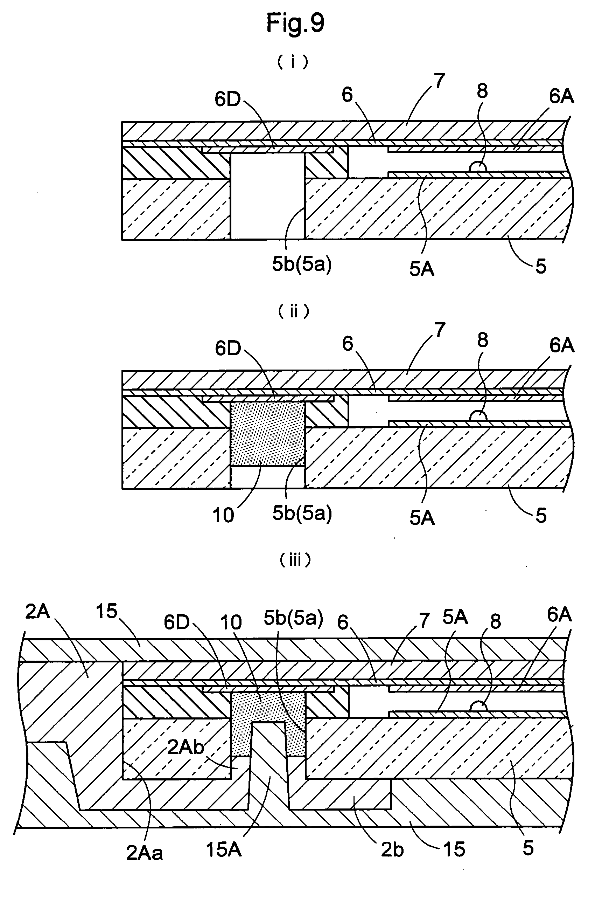

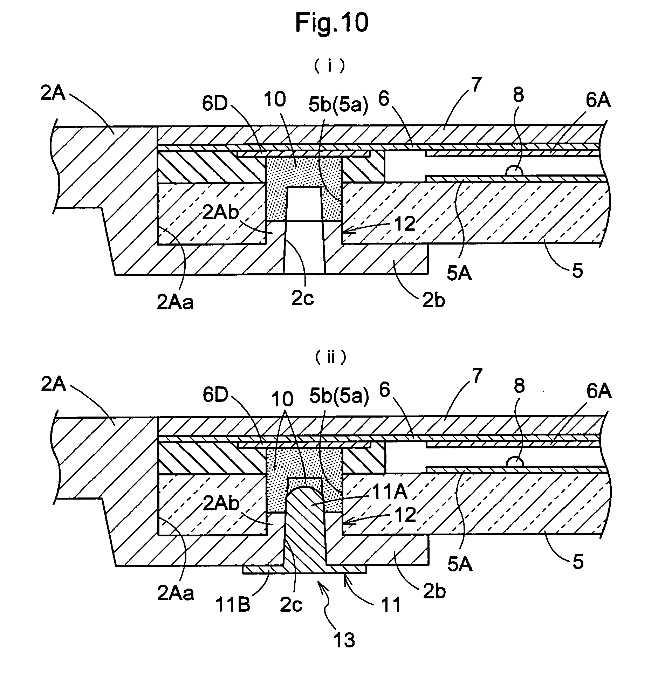

Hereinafter, a second embodiment in which the protection panel A with a touch input function according to the present invention is applied to the mobile-phone 1 as one example of the electronic device B will be described with reference to the drawings.
In the second embodiment, the configuration is the same as that of the first embodiment except a portion where a touch input signal is taken out in the protection panel A, and thus only a configuration of the portion where a touch input signal is taken out will be described with reference to Figs. 9 and 10.

First, the rear substrate 5 and the front substrate 6 are stuck together, and then on the electrode 5D(6D) side in the through holes 5a(5b), a silver paste as the conductive adhesive 10 is injected with a dispenser (see Fig. 9 (i) and (ii)).
After the injection, a stack of the rear substrate 5 and the front substrate 6 is placed at a predetermined position in a mold 15 for injection-molding the front housing part 2A, in such a manner that each of four protrusions 15A provided on the mold 15 is positioned at a center of the corresponding through hole 5a,5b of the rear substrate 5, and a protruding end thereof reaches the conductive adhesive 10 which has been injected into each of the through holes 5a,5b and at the same time, that an acrylic resin for molding the front housing part is allowed to flow into the space between the through holes 5a,5b and the respective protrusions 15A.
After placing the stack, an acrylic resin is injected into a molding space for the front housing part in the mold 15 and then cured (see Fig. 9 (iii)).
With this configuration, the front housing part 2A can be obtained which has the insert portion 2Ab inserted into each of the through holes 5a,5b of the rear substrate 5 and having the through hole 2c at a center, with the rear substrate 5 and the front substrate 6 fitted into the display window 2Aa (see Fig. 10 (i)).

Next, on the electrode 5D(6D) side of the through hole 2c of each insert portion 2Ab, a silver paste as the conductive adhesive 10 is added using a dispenser.
After the addition, by ultrasonic melting using a ultrasonic press-fitting device, the conductive pin 11 having the head portion is press-fitted into each of the through holes 5a,5b through the insert portion 2Ab, in such a manner that one end portion 11A reaches the conductive adhesive 10, to thereby form the conductive portion 13 that allows a conductive connection between the electrode 5D of the rear substrate 5 or the electrode 6D of the front substrate 6 and the corresponding spring connector pin 9 as the external terminal C provided on the rear housing part 2B, and to allow a touch input signal from the resistive films 5A,6A to be taken out (see Fig. 10 (ii)).

With this configuration, the protection panel A with a touch input function uniformly provided in the front housing part 2A can be obtained. In addition, in this configuration, the insert portion 2Ab integrally formed with the front housing part 2A functions as the protection member 12.

### <Third embodiment>

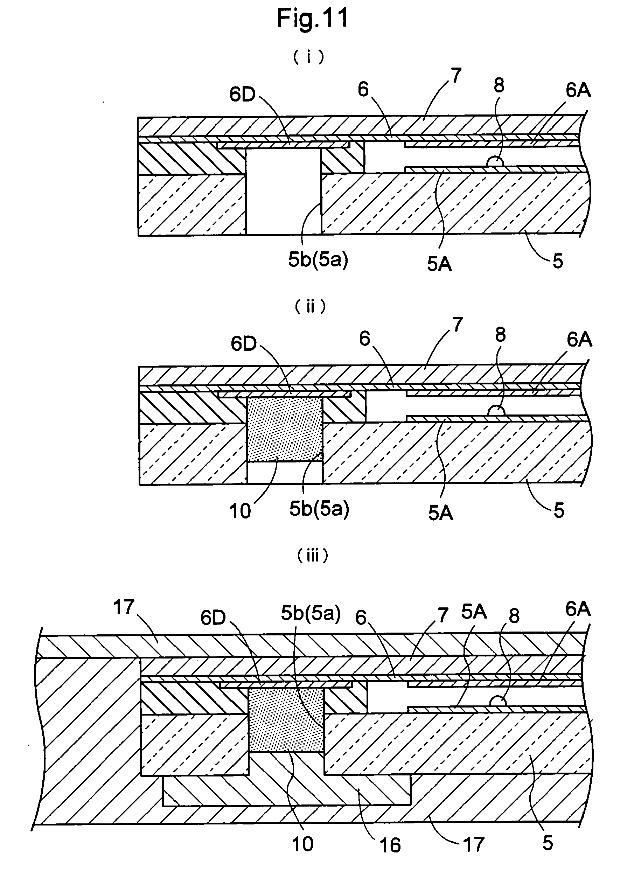

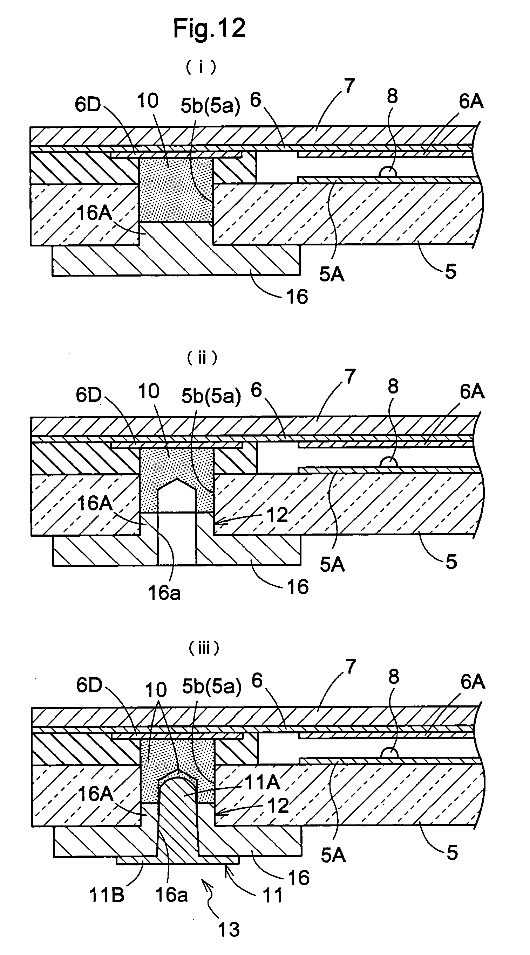

Hereinafter, a third embodiment in which the protection panel A with a touch input function according to the present invention is applied to the mobile-phone 1 as one example of the electronic device B will be described with reference to the drawings.
In the third embodiment, the configuration is the same as that of the first embodiment except a portion where a touch input signal is taken out in the protection panel A, and thus only a configuration of the portion where a touch input signal is taken out will be described with reference to Figs. 11 and 12.

First, the rear substrate 5 and the front substrate 6 are stuck together, and then on the electrode 5D(6D) side in the through hole 5a(5b), a silver paste as the conductive adhesive 10 is injected with a dispenser (see Fig. 11 (i) and (ii)).
After the injection, a stack of the rear substrate 5 and the front substrate 6 is placed at a predetermined position in a mold 17 for injection-molding a mounting platform 16 configured to put the rear substrate 5 and the front substrate 6 in the display window 2Aa of the front housing part 2A in such a manner that an acrylic resin for molding the mounting platform is allowed to flow into the through holes 5a,5b.
After placing the stack, an acrylic resin is injected into a molding space for the mounting platform in the mold 17 and then cured (see Fig. 11 (iii)).
With this configuration, the mounting platform 16 can be obtained which has an insert portion 16A inserted into each of the through holes 5a,5b of the rear substrate 5 and is provided uniformly on the rear face of the rear substrate 5 (see Fig. 12 (i)).

Next, a through hole 16a that penetrates through a center portion of the insert portion 16A of the mounting platform 16 is made with a drill to thereby form the cylindrical protection member 12 fitted into each of the through holes 5a,5b (see Fig. 12 (ii)).
After the formation, on the electrode 5D(6D) side in the protection member 12 (through hole 16a), a silver paste as the conductive adhesive 10 is added using a dispenser.
After the addition, by ultrasonic melting using a ultrasonic press-fitting device, the conductive pin 11 having the head portion is press-fitted into each of the through holes 5a,5b through the protection member 12, in such a manner that one end portion 11A reaches the conductive adhesive 10, to thereby form the conductive portion 13 that allows a conductive connection between the electrode 5D of the rear substrate 5 or the electrode 6D of the front substrate 6 and the external terminal C, and to allow a touch input signal from the resistive films 5A,6A to be taken out (see Fig. 12 (iii)).

With this configuration, the protection panel A with a touch input function with the mounting platform 16 uniformly provided thereon can be obtained.

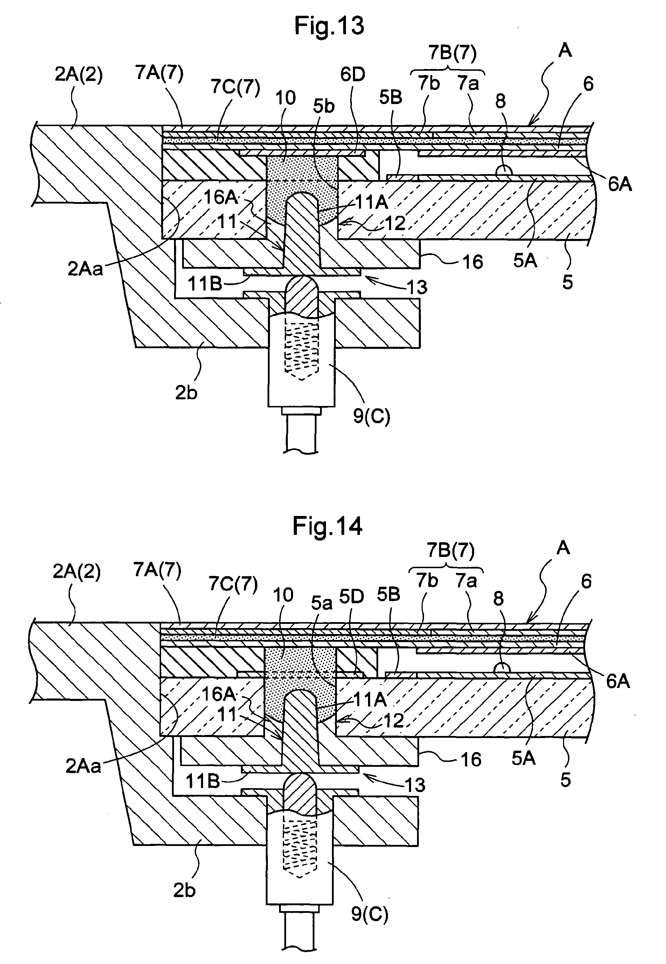

As shown in Figs. 13 and 14, in this configuration, the flat terminal 11B which is conductively connected to the external terminal C is located on a rear side of the mounting platform 16, and thus each of four spring connector pins 9 as the external terminal C is provided at a position opposed to the corresponding through hole 5a,5b of the rear substrate 5 in the support frame 2b of the front housing part 2A.

With this configuration, when the protection panel A is fitted into the display window 2Aa of the front housing part 2A and is supported by the support frame 2b of the front housing part 2A, each flat terminal 11 of the protection panel A is conductively connected to the corresponding spring connector pin 9 of the front housing part 2A, to thereby allow a touch input signal from the resistive films 5A,6A to be taken out.

### <Fourth embodiment>

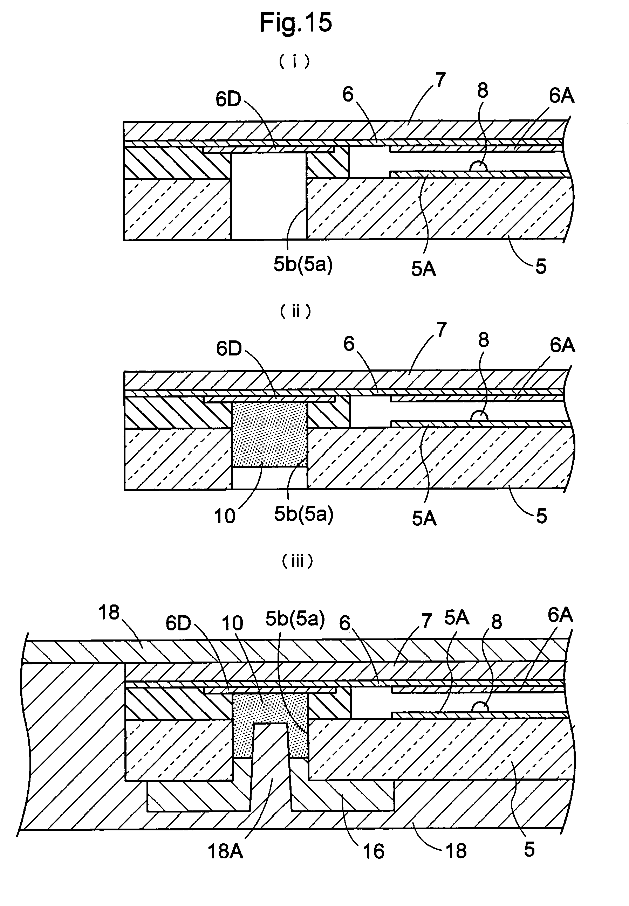

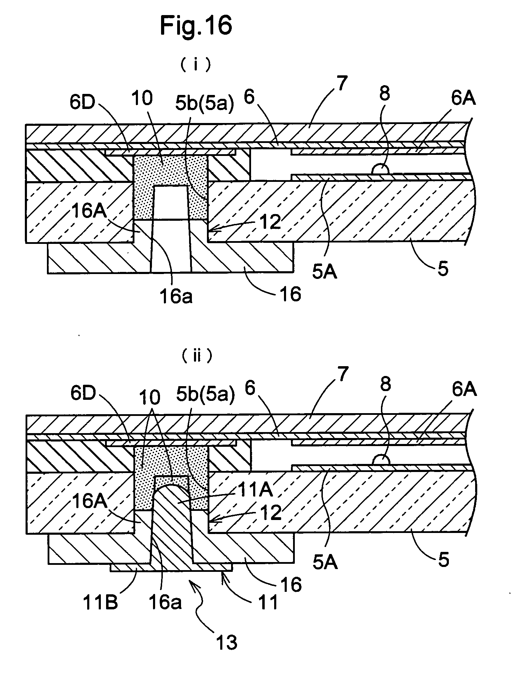

Hereinafter, a fourth embodiment in which the protection panel A with a touch input function according to the present invention is applied to the mobile-phone 1 as one example of the electronic device B will be described with reference to the drawings.
In the fourth embodiment, the configuration is the same as that of the first embodiment except a portion where a touch input signal is taken out in the protection panel A, and thus only a configuration of the a portion where a touch input signal is taken out will be described with reference to Figs. 15 and 16.

First, the rear substrate 5 and the front substrate 6 are stuck together, and then on the electrode 5D(6D) side in the through hole 5a(5b), a silver paste as the conductive adhesive 10 is injected with a dispenser (see Fig. 15 (i) and (ii)).
After the injection, a stack of the rear substrate 5 and the front substrate 6 is placed at a predetermined position in a mold 18 for injection-molding the mounting platform 16 configured to put the rear substrate 5 and the front substrate 6 in the display window 2Aa of the front housing part 2A, in such a manner that each of four protrusions 18A provided on the mold 18 is positioned at a center of the corresponding through hole 5a,5b of the rear substrate 5, and a protruding end thereof reaches the conductive adhesive 10 which has been injected into each of the through holes 5a,5b and at the same time, that an acrylic resin for molding the mounting platform is allowed to flow into the space between the through holes 5a,5b and the respective protrusions 18A.
After placing the stack, an acrylic resin is injected into a molding space for the mounting platform in the mold 18 and then cured (see Fig. 15 (iii)).
With this configuration, the mounting platform 16 can be obtained which has the insert portion 16A inserted into each of the through holes 5a,5b of the rear substrate 5 and having the through hole 16a at a center, and is provided uniformly on the rear face of the rear substrate 5 (see Fig. 16 (i)).

Next, on the electrode 5D(6D) side in the through hole 16a of each of the insert portion 16A, a silver paste as the conductive adhesive 10 is added using a dispenser.
After the addition, by ultrasonic melting using a ultrasonic press-fitting device, the conductive pin 11 having the head portion is press-fitted into each of the through holes 5a,5b through the insert portion 16A, in such a manner that one end portion 11A reaches the conductive adhesive 10, to thereby form the conductive portion 13 that allows a conductive connection between the electrode 5D of the rear substrate 5 or the electrode 6D of the front substrate 6 and the external terminal C, and to allow a touch input signal from the resistive films 5A,6A to be taken out (see Fig. 16 (ii)).

With this configuration, the protection panel A with a touch input function with the mounting platform 16 uniformly provided thereon can be obtained. In addition, in this configuration, the insert portion 16A integrally formed with the mounting platform 16 functions as the protection member 12.

As shown in Figs. 13 and 14, in this configuration, the flat terminal 11B which is conductively connected to the external terminal C is located on the rear side of the mounting platform 16, and thus each of four spring connector pins 9 as the external terminal C is provided at a position opposed to the corresponding through hole 5a,5b of the rear substrate 5 in the support frame 2b of the front housing part 2A.

With this configuration, when the protection panel A is fitted into the display window 2Aa of the front housing part 2A and is supported by the support frame 2b of the front housing part 2A, each flat terminal 11 of the protection panel A is conductively connected to the corresponding spring connector pin 9 of the front housing part 2A, to thereby allow a touch input signal from the resistive films 5A,6A to be taken out.

### <Fifth embodiment>

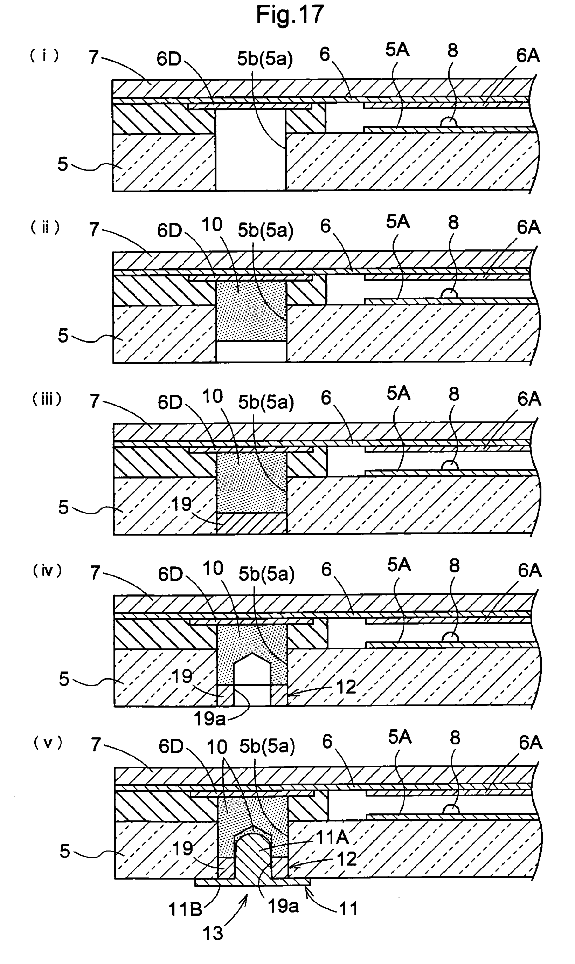

Hereinafter, a fifth embodiment in which the protection panel A with a touch input function according to the present invention is applied to the mobile-phone 1 as one example of the electronic device B will be described with reference to the drawings.
In the fifth embodiment, the configuration is the same as that of the first embodiment except a portion where a touch input signal is taken out in the protection panel A, and thus only a configuration of the portion where a touch input signal is taken out will be described with reference to Fig. 17.

First, the rear substrate 5 and the front substrate 6 are stuck together, and then on the electrode 5D(6D) side in the through hole 5a(5b), a silver paste as the conductive adhesive 10 is injected with a dispenser (see Fig. 17 (i) and (ii)).
After the injection, each of the through holes 5a,5b is filled with an acrylic resin 19 as insulating resin with a dispenser, which is allowed to be cured, and after the curing, a through hole 19a that penetrates through a center portion of the acrylic resin 19 is made with a drill.
With this configuration, the cylindrical protection member 12 fitted into each of the through holes 5a,5b can be obtained (see Fig. 17 (iii) and (iv)).
Next, on the electrode 5D(6D) side in the protection member 12 (through hole 19a), a silver paste as the conductive adhesive 10 is added using a dispenser.
After the addition, by ultrasonic melting using a ultrasonic press-fitting device, the conductive pin 11 having the head portion is press-fitted into each of the through holes 5a,5b through the protection member 12, in such a manner that one end portion 11A reaches the conductive adhesive 10, to thereby form the conductive portion 13 that allows a conductive connection between the electrode 5D of the rear substrate 5 or the electrode 6D of the front substrate 6 and the external terminal C, and to allow a touch input signal from the resistive films 5A,6A to be taken out (see Fig. 17 (v)).

With this configuration, the protection panel A with a touch input function can be obtained.

In this configuration, the flat terminal 11B which is conductively connected to the external terminal C is located on a rear side of the protection panel A, and thus each of four spring connector pins 9 as the external terminal C is provided at a position opposed to the corresponding through hole 5a, 5b of the rear substrate 5 in the support frame 2b of the front housing part 2A.

With this configuration, when the protection panel A is fitted into the display window 2Aa of the front housing part 2A and is supported by the support flame 2b of the front housing part 2A, each flat terminal 11 of the protection panel A is conductively connected to the corresponding spring connector pin 9 of the front housing part 2A, to thereby allow a touch input signal from the resistive films 5A,6A to be taken out.

### <Sixth embodiment>

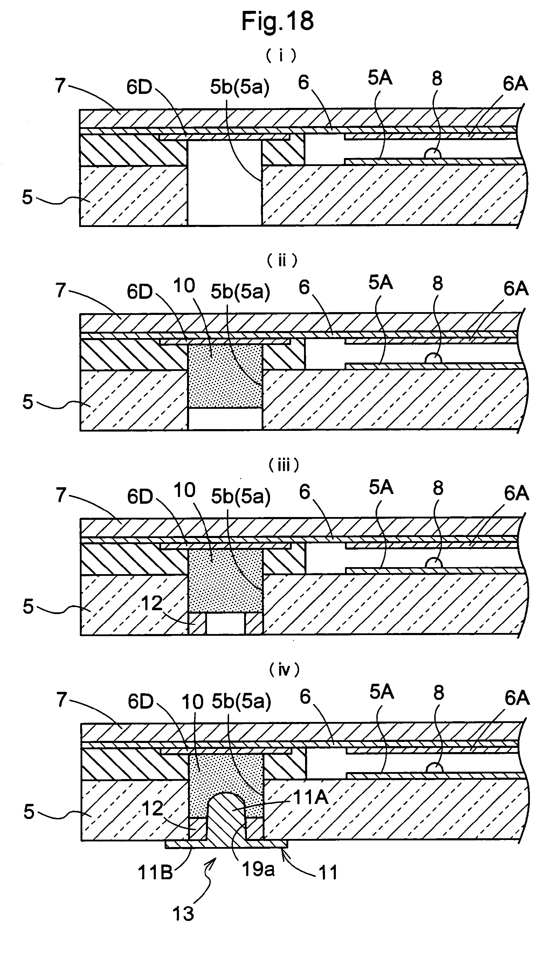

Hereinafter, a sixth embodiment in which the protection panel A with a touch input function according to the present invention is applied to the mobile-phone 1 as one example of the electronic device B will be described with reference to the drawings.
In the sixth embodiment, the configuration is the same as that of the first embodiment except a portion where a touch input signal is taken out in the protection panel A, and thus only a configuration of the portion where a touch input signal is taken out will be described with reference to Fig. 18.

First, the rear substrate 5 and the front substrate 6 are stuck together, and then on the electrode 5D(6D) side in the through hole 5a(5b), a silver paste as the conductive adhesive 10 is injected with a dispenser (see Fig. 18 (i) and (ii)).
After the injection, into each of the through holes 5a,5b, the cylindrical protection member 12 made of a thermoplastic resin, such as polycarbonate (PC) and acrylic resin (PMMA), is inserted (see Fig. 18 (iii)).
After the insertion, by ultrasonic melting using a ultrasonic press-fitting device, the conductive pin 11 having the head portion is press-fitted into each of the through holes 5a,5b through the protection member 12, in such a manner that one end portion 11A reaches the conductive adhesive 10, to thereby form the conductive portion 13 that allows a conductive connection between the electrode 5D of the rear substrate 5 or the electrode 6D of the front substrate 6 and the external terminal C, and to allow a touch input signal from the resistive films 5A,6A to be taken out (see Fig. 18 (iv)).

With this configuration, the protection panel A with a touch input function can be obtained.

In this configuration, the flat terminal 11B which is conductively connected to the external terminal C is located on a rear side of the protection panel A, and thus each of four spring connector pins 9 as the external terminal C is provided at a position opposed to the corresponding through hole 5a,5b of the rear substrate 5 in the support frame 2b of the front housing part 2A.

With this configuration, when the protection panel A is fitted into the display window 2Aa of the front housing part 2A and is supported by the support frame 2b of the front housing part 2A, each flat terminal 11 of the protection panel A is conductively connected to the corresponding spring connector pin 9 of the front housing part 2A, to thereby allow a touch input signal from the resistive films 5A,6A to be taken out.

### <Seventh embodiment>

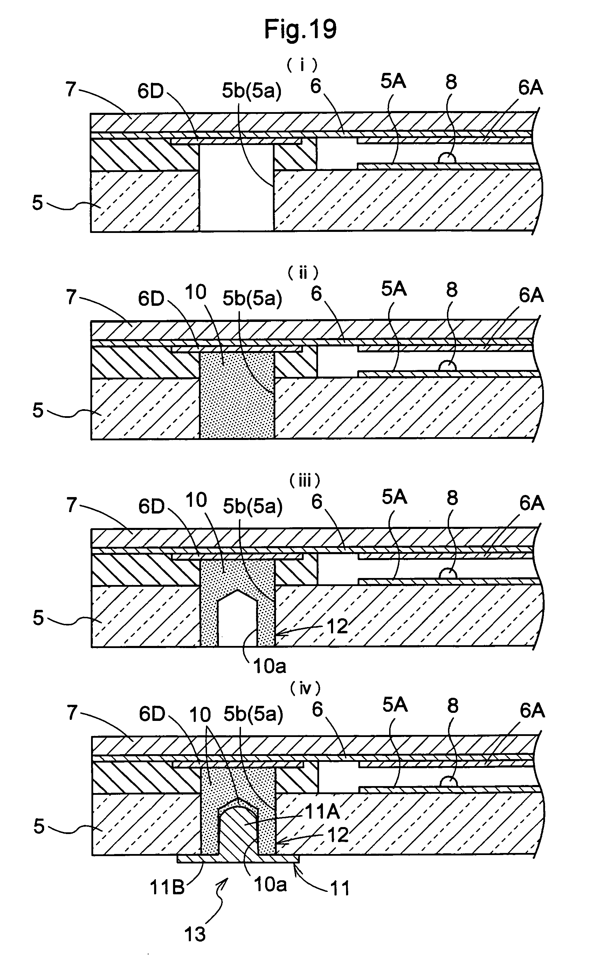

Hereinafter, a seventh embodiment in which the protection panel A with a touch input function according to the present invention is applied to the mobile-phone 1 as one example of the electronic device B will be described with reference to the drawings.
In the seventh embodiment, the configuration is the same as that of the first embodiment except a portion where a touch input signal is taken out in the protection panel A, and thus only a configuration of the portion where a touch input signal is taken out will be described with reference to Fig. 19.

First, the rear substrate 5 and the front substrate 6 are stuck together, and then each of the through holes 5a,5b is filled with a silver paste as the conductive adhesive 10 with a dispenser, which is allowed to be cured (see Fig. 19 (i) and (ii)).
After the curing, an insertion hole 10a extending in a center portion of the conductive adhesive 10 is made with a drill.
With this configuration, the cylindrical protection member 12 fitted into each of the through holes 5a,5b can be obtained (Fig. 19 (iii)).
Next, on the electrode 5D(6D) side in the protection member 12 (insertion hole 10a), a silver paste as the conductive adhesive 10 is added using a dispenser.
After the addition, the conductive pin 11 having the head portion is press-fitted into each of the through holes 5a,5b through the protection member 12, to thereby form the conductive portion 13 that allows a conductive connection between the electrode 5D of the rear substrate 5 or the electrode 6D of the front substrate 6 and the external terminal C, and to allow a touch input signal from the resistive films 5A,6A to be taken out (see Fig. 19 (iv)).

With this configuration, the protection panel A with a touch input function can be obtained.

In this configuration, the flat terminal 11B which is conductively connected to the external terminal C is located on the rear side of the protection panel A, and thus each of four spring connector pins 9 as the external terminal C is provided at a position opposed to the corresponding through hole 5a,5b of the rear substrate 5 in the support frame 2b of the front housing part 2A.

With this configuration, when the protection panel A is fitted into the display window 2Aa of the front housing part 2A and is supported by the support frame 2b of the front housing part 2A, each flat terminal 11 of the protection panel A is conductively connected to the corresponding spring connector pin 9 of the front housing part 2A, to thereby allow a touch input signal from the resistive films 5A,6A to be taken out.

### <Other embodiments>

(1) The cylindrical protection member 12 insertable into each of the through holes 5a,5b of the rear substrate 5 may be integrally formed with the support frame 2a of the front housing part 2A and then the stack of the rear substrate 5 and the front substrate 6 may be fitted into the display window 2Aa of the front housing part 2A.

(2) The cylindrical protection member 12 insertable into each of the through holes 5a,5b of the rear substrate 5 may be integrally formed with the mounting platform 16, and then the protection member 12 of the mounting platform 16 may be fitted into each of the through holes 5a,5b of the rear substrate 5.

(3) Between the inner wall of each of the through holes 5a,5b of the rear substrate 5 and an outer wall of the protection member 12, an anchor layer may be provided that enhances adhesiveness of the through holes 5a,5b with the protection member 12.

(4) In the embodiment above, the stack of the rear substrate 5 and the front substrate 6 is placed at a predetermined position in the mold 14,15 for molding a front housing part or the mold 17,18 for molding a mounting platform, to thereby integrally form the insert portion 2Ab or 16A inserted into the corresponding through hole 5a,5b of the rear substrate 5, together with the front housing part 2A or the mounting platform 16. At the same time, the conductive pin 11 may be placed in a molding space for forming an insert portion in the molds 14,15,17,18, to thereby form the insert portion 2Ab or 16A integrally with the front housing part 2A or the mounting platform 16, while the conductive pin 11 is provided in the insert portion 2Ab or 16A in such a manner that one end portion 11 A thereof reaches the conductive adhesive 10 that has been injected into each of the through holes 5a,5b.

(5) The conductive pin 11 may be embedded in the insert portion 2Ab of the front housing part 2A, the protection member 12 or the insert portion 16A of the mounting platform 16, so that the other end portion 11B of each conductive pin 11 to be connected to the external terminal C does not protrude from the front housing part 2A, the protection member 12 or the mounting platform 16.

### Industrial applicability

The protection panel with a touch input function and the method for manufacturing the same according to the present invention can be applied to an electronic device, such as mobile-phone, smartphone, PDA, car navigation equipment, digital camera, digital video camera, portable gaming device and tablet.

## Claims

1. A protection panel with a touch input function comprising:
a front substrate which has a resistive film formed on a rear face of the front substrate and whose rim portion is decorated; and a rear substrate comprising at least a glass plate which has a resistive film formed on a front face of the rear substrate and whose rim portion has through holes for electric conduction formed therein,
the front and rear substrates being connected so that the resistive films are opposingly arranged with a predetermined gap, and
electrodes of the respective resistive films being conductively connected to corresponding external terminals utilizing the respective through holes,
wherein a conductive adhesive is injected into the through hole, and
a protection member is provided between a conductive pin inserted into the through hole and an inner wall of the through hole, the conductive pin being inserted into the through hole so that one end portion of the conductive pin is brought into contact with the injected conductive adhesive.

2. The protection panel with a touch input function according to claim 1, wherein a conductive portion that allows a conductive connection between an electrode of the resistive film and an external terminal is formed of the conductive adhesive and the conductive pin inserted into the through hole.

3. The protection panel with a touch input function according to claim 1 or 2, wherein the protection member is made of an insulating resin.

4. The protection panel with a touch input function according to claim 1 or 2, wherein the protection member is made of the conductive adhesive.

5. The protection panel with a touch input function according to any one of claims 1 to 4, wherein
the front substrate and the rear substrate are provided in a display window formed in a housing of an electronic device through a mounting platform, and
the protection member is integrally formed with the mounting platform.

6. The protection panel with a touch input function according to any one of claims 1 to 3, wherein
the front substrate and the rear substrate are provided in a display window formed in a housing of an electronic device, and
the protection member is integrally formed with the housing.

7. A method for manufacturing a protection panel with a touch input function in which a conductive portion is formed that allows a conductive connection between an electrode of a resistive film and an external terminal, comprising the steps of:
connecting a front substrate which has a resistive film formed on a rear face of the front substrate and whose rim portion is decorated and a rear substrate comprising at least a glass plate which has a resistive film formed on a front face of the rear substrate and whose rim portion has through holes for electric conduction formed therein so that the resistive films are opposingly arranged with a predetermined gap;
injecting a conductive adhesive into the through hole;
after the injection of the conductive adhesive, filling the through hole with an insulating resin;
after the insulating resin is cured, making a through hole penetrating through the insulating resin with a drill; and
inserting a conductive pin into the through hole of the insulating resin.

8. A method for manufacturing a protection panel with a touch input function in which a conductive portion is formed that allows a conductive connection between an electrode of a resistive film and an external terminal, comprising the steps of:
connecting a front substrate which has a resistive film formed on a rear face of the front substrate and whose rim portion is decorated and a rear substrate comprising at least a glass plate which has a resistive film formed on a front face of the rear substrate and whose rim portion has through holes for electric conduction formed therein so that the resistive films are opposingly arranged with a predetermined gap; and
injecting a conductive adhesive into the through hole, inserting a cylindrical protection member into the through hole, and inserting a conductive pin into the cylindrical protection member so that one end portion of the conductive pin is brought into contact with the injected conductive adhesive.

9. A method for manufacturing a protection panel with a touch input function in which a conductive portion is formed that allows a conductive connection between an electrode of a resistive film and an external terminal, comprising the steps of:
connecting a front substrate which has a resistive film formed on a rear face of the front substrate and whose rim portion is decorated and a rear substrate comprising at least a glass plate which has a resistive film formed on a front face of the rear substrate and whose rim portion has through holes for electric conduction formed therein so that the resistive films are opposingly arranged with a predetermined gap;
filling the through hole with a conductive adhesive;
after the conductive adhesive is cured, making an insertion hole in the conductive adhesive with a drill; and
inserting a conductive pin into the insertion hole.

10. A method for manufacturing a protection panel with a touch input function in which a conductive portion is formed that allows a conductive connection between an electrode of a resistive film and an external terminal, comprising the steps of:
connecting a front substrate which has a resistive film formed on a rear face of the front substrate and whose rim portion is decorated and a rear substrate comprising at least a glass plate which has a resistive film formed on a front face of the rear substrate and whose rim portion has through holes for electric conduction formed therein so that the resistive films are opposingly arranged with a predetermined gap;
injecting a conductive adhesive into the through hole;
after the injection of the conductive adhesive, placing a stack of the front and rear substrates at a predetermined position in a mold for forming a mounting platform for putting the front and rear substrates in a display window formed in a housing of an electronic device so that a resin for molding the mounting platform is allowed to flow into the through hole;
injecting a resin into the mold to form the mounting platform and an insert portion inserted into the through hole;
after the formation, making a second through hole penetrating through the insert portion with a drill; and
inserting a conductive pin into the second through hole of the insert portion.

11. A method for manufacturing a protection panel with a touch input function in which a conductive portion is formed that allows a conductive connection between an electrode of a resistive film and an external terminal, comprising the steps of:
connecting a front substrate which has a resistive film formed on a rear face of the front substrate and whose rim portion is decorated and a rear substrate comprising at least a glass plate which has a resistive film formed on a front face of the rear substrate and whose rim portion has through holes for electric conduction formed therein so that the resistive films are opposingly arranged with a predetermined gap;
injecting a conductive adhesive into the through hole;
after the injection of the conductive adhesive, placing a stack of the front and rear substrates at a predetermined position in a mold for forming a mounting platform for putting the front and rear substrates in a display window formed in a housing of an electronic device so that a resin for molding the mounting platform is allowed to flow into the through hole;
the mold being provided with a protrusion protruding into a center of the through hole so as to reach the conductive adhesive;
injecting a resin into the mold to form the mounting platform and an insert portion which is inserted into the through hole and whose central portion has a second through hole; and
after the formation, inserting a conductive pin into the second through hole of the insert portion.

12. A method for manufacturing a protection panel with a touch input function in which a conductive portion is formed that allows a conductive connection between an electrode of a resistive film and an external terminal, comprising the steps of:
connecting a front substrate which has a resistive film formed on a rear face of the front substrate and whose rim portion is decorated and a rear substrate comprising at least a glass plate which has a resistive film formed on a front face of the rear substrate and whose rim portion has through holes for electric conduction formed therein so that the resistive films are opposingly arranged with a predetermined gap;
injecting a conductive adhesive into the through hole;
after the injection of the conductive adhesive, placing a stack of the front and rear substrates at a predetermined portion in a mold for forming a housing of an electronic device so that a resin for molding the housing is allowed to flow into the through hole,
injecting a resin into the mold to form the housing and an insert portion inserted into the through hole;
after the formation, making a second through hole penetrating through the insert portion with a drill; and
inserting a conductive pin into the second through hole of the insert portion.

13. A method for manufacturing a protection panel with a touch input function in which a conductive portion is formed that allows a conductive connection between an electrode of a resistive film and an external terminal, comprising the steps of:
connecting a front substrate which has a resistive film formed on a rear face of the front substrate and whose rim portion is decorated and a rear substrate comprising at least a glass plate which has a resistive film formed on a front face of the rear substrate and whose rim portion has through holes for electric conduction formed therein so that the resistive films are opposingly arranged with a predetermined gap;
injecting a conductive adhesive into the through hole;
after the injection of the conductive adhesive, placing a stack of the front and rear substrates at a predetermined position in a mold for forming a housing of an electronic device so that a resin for molding the housing is allowed to flow into the through hole,
the mold being provided with a protrusion protruding into a center of the through hole so as to reach the conductive adhesive;
injecting a resin into the mold to form the housing and an insert portion which is inserted into the through hole and whose central portion has a second through hole; and
after the formation, inserting a conductive pin into the second through hole of the insert portion.
